(19) Europäisches Patentamt
European Patent Office
Office européen des brevets

(11) **EP 2 944 417 A1**

(12) **EUROPEAN PATENT APPLICATION**
published in accordance with Art. 153(4) EPC

(43) Date of publication:
**18.11.2015 Bulletin 2015/47**

(51) Int Cl.:
***B23K 35/30*** (2006.01)    ***C22C 38/58*** (2006.01)

(21) Application number: **14738291.5**

(86) International application number:
**PCT/JP2014/050369**

(22) Date of filing: **10.01.2014**

(87) International publication number:
**WO 2014/109402 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.01.2013 JP 2013004074**
**31.10.2013 JP 2013226438**

(71) Applicant: **Kabushiki Kaisha Kobe Seiko Sho (Kobe Steel, Ltd.)**
**Kobe-shi, Hyogo 651-8585 (JP)**

(72) Inventors:
• **NAKO Hidenori**
**Hyogo 651-2271 (JP)**

• **KOCHI Takuya**
**Hyogo 651-2271 (JP)**
• **URUSHIHARA Wataru**
**Hyogo 651-2271 (JP)**
• **KAWASAKI Hiroyuki**
**Kanagawa 251-8551 (JP)**
• **HAN Peng**
**Kanagawa 251-8551 (JP)**
• **KITAGAWA Yoshihiko**
**Kanagawa 251-8551 (JP)**

(74) Representative: **Müller-Boré & Partner**
**Patentanwälte PartG mbB**
**Friedenheimer Brücke 21**
**80639 München (DE)**

(54) **WELDED METAL WITH EXCELLENT RESISTANCE TO HYDROGEN EMBRITTLEMENT, AND SOLID WIRE FOR SUBMERGED ARC WELDING**

(57)    The weld metal of the present invention has a given chemical composition, contains retained austenite particles in an amount of 2,500 grains/mm$^2$ or more, and has a volume fraction of the retained austenite particles of 4.3 vol% or more and a content ratio of Cr and Mn, [Cr]/[Mn], of 0.20 or more. The weld metal has excellent resistance to hydrogen embrittlement even when the weld metal has a high tensile strength of more than 780 MPa.

EP 2 944 417 A1

**Description**

TECHNICAL FIELD

The present invention relates to a weld metal used for a welded structure and can reduce susceptibility to hydrogen embrittlement. Specifically, the present invention relates to a weld metal with excellent resistance to hydrogen embrittlement even when a test is carried out with the use of a large size test specimen that tends to include more structural weak parts at the time of the evaluation of the resistance to hydrogen embrittlement by using a SSRT (Slow Strain Rate Technique) method. The present invention also relates to a solid wire for submerged arc welding preferable for forming the weld metal.

BACKGROUND ART

At the time of welding a high tensile strength steel, preheating/interpass temperature should be strictly controlled from the viewpoint of prevention of low-temperature cracking at a weld metal part and this reduces construction efficiency. In recent years, the strength of the steel products used for welding structures has been increasingly higher. For the weld metal, requirement for higher strength has been also increased (for example, HT 780: 780MPa class high-tensile steel).
When a steel product having higher strength as described above has been developed, the steel product tends to deteriorate low-temperature cracking resistance. Consequently, a steel product that satisfies both higher strength and higher low-temperature cracking resistance is required. Particularly, submerged arc welding has a large heat input during the welding and has excellent welding efficiency and thus a technique securing low-temperature cracking resistance is required for a weld metal formed by this welding method.
It is inferred that the low-temperature cracking as described above is caused by segregating diffusive hydrogen to grain boundaries and thus deteriorating the grain boundary strength (hereinafter, this phenomenon is referred to as "hydrogen embrittlement"). In order to improve the low-temperature cracking resistance, reduction in the amount of diffusive hydrogen or reduction in susceptibility to hydrogen embrittlement of the weld metal is important. From these viewpoints, various techniques are suggested.
For example, Patent Literature 1 discloses the technique in which the low-temperature cracking is prevented by dispersing Mo carbide (carbide containing Mo) that has high hydrogen trapping ability in a weld metal. In this technique, however, in order to disperse the Mo carbide, a particular welding method in which submerged arc welding is carried out from the inside after steel products are butted and then the maximum heating temperature of the weld metal obtained at the inner surface side is controlled should be employed. Consequently, this technique cannot be applied to common welding for steel products.
Patent Literature 2 suggests a technique that prevents the low-temperature cracking by controlling a cooling time during welding. In this technique, strict welding procedure control depending on chemical compositions is required and thus workload becomes high.
Patent Literature 3 suggests a technique that prevents the low-temperature cracking by setting a fraction of retained austenite that traps diffusive hydrogen to 1% or more in a weld metal. This technique, however, presumes double one layer seam welding for steel pipes. Consequently, this technique cannot be applied to common welding for steel products.
Patent Literature 4 suggests a technique that improves the low-temperature cracking resistance by reducing the amount of diffusive hydrogen and appropriately controlling strength and a chemical composition. Also in this technique, however, satisfied strength level is affected by the composition and thus applied places are limited in actual welding.
Patent Literatures 5 and 6 disclose a particular welding method called laser arc hybrid welding. This method has advantages that welding efficiency almost equal to the efficiency of large heat input submerged arc welding is obtained with low heat input and, at the same time, a weld metal having excellent cracking resistance is obtained. The method, however, cannot be applied to common arc welding.
Any of these techniques already having been suggested until now improve the resistance to hydrogen embrittlement as means for improving the low-temperature cracking resistance. In actual welding procedures, however, the amount of hydrogen in the weld metal may be increased by various factors. In such a case, the hydrogen embrittlement raises a problem without relation to the low-temperature cracking resistance. Consequently, it is necessary to directly solve the problem of improving the resistance to hydrogen embrittlement without relation to the presence or absence of the solution of the low-temperature cracking resistance.
In Patent Literature 7, the inventors of the present invention have developed a technique that improves the resistance to hydrogen embrittlement of the HT 780 MPa class weld metal by controlling retained austenite morphology. A welding method presumed in this technique, however, is mainly gas shielded arc welding using a flux cored wire (FCW). For example, there is a room for improving the resistance to hydrogen embrittlement when other welding methods often used for welding procedures such as the submerged arc welding. In the technique in Patent Literature 7, a relatively narrow region in the weld metal is evaluated. In an actual weld metal, the structure of the weld metal significantly varies depending on observed positions. In order to evaluate the resistance to hydrogen embrittlement more accurately, a method in which relatively wider regions in the weld metal can be evaluated is required.

In recent years, HT780 class steel has been also increasingly applied to the weld metal used for marine structures. For these weld metals, steel products are required to have excellent strength of 780 MPa-class steel and resistance to hydrogen embrittlement so as to withstand the use in cold regions.

On the other hand, in Patent Literature 8, the strength and the low-temperature toughness at weld metal parts are intended to be improved by the wire for submerged arc welding in which the wire composition is specified. In Patent Literature 8, however, a presumed operating temperature is down to about -20°C and requirement in a temperature side lower than about -20°C cannot be satisfied. For example, properties such as toughness are insufficient at -60°C.

[Citation List]

[Patent Literature]

Patent Literature 1: Japanese Unexamined Patent Application Publication No. 2005-40816
Patent Literature 2: Japanese Unexamined Patent Application Publication No. 2003-33876
Patent Literature 3: Japanese Unexamined Patent Application Publication No. 2002-115032
Patent Literature 4: Japanese Unexamined Patent Application Publication No. H11-147196
Patent Literature 5: Japanese Unexamined Patent Application Publication No. 2007-260715
Patent Literature 6: Japanese Unexamined Patent Application Publication No. 2007-260716
Patent Literature 7: Japanese Unexamined Patent Application Publication No. 2012-176434
Patent Literature 8: Japanese Unexamined Patent Application Publication No. 2004-337863

SUMMRY OF THE INVENTION

[Problems that the Invention is to Solve]

The present invention has been made in the view of such circumstances, and the purpose of the present invention is to provide a weld metal having excellent resistance to hydrogen embrittlement even when a tensile strength is a high strength of more than 780 MPa. The purpose of the present invention is also to provide a solid wire for submerged arc welding that is preferable for the formation of the weld metal.

[Means for Solving the Problems]

A weld metal having excellent resistance to hydrogen embrittlement according to the present invention, which can solve the above-described problems, is summarized in comprising:

C of 0.02% to 0.12% (by mass%, the same holds true for each chemical composition described below);
Si of 0.18% to 2.00%;
Mn of 0.90% to 2.5%;
Ni of 1.0% to 3.5%;
Cr of 0.3% to 2.0%;
Al of 0.030% or less (excluding 0%);
N of 0.015% or less (excluding 0%); and
O of 0.050% or less (excluding 0%);
wherein the remainder consists of iron and inevitable impurities; wherein the weld metal comprises 2500 particles/mm$^2$ or more of retained austenite particles having a circle-equivalent diameter of 0.15 $\mu$m or more;
a volume fraction of a retained austenite phase is 4.3% or more relative to entire structures; and
a content ratio of Cr and Mn, [Cr]/[Mn], is 0.20 or more.

In the measurement of the particle number density, the size of the target retained austenite particles is determined to be 0.15$\mu$m or more in the circle-equivalent diameter as a size of measuring limit or larger. The circle-equivalent diameter means a diameter determined by focusing attention on the size of the retained austenite particles observed in an observation surface under a light microscope and assuming a circle whose area is equal to the observed size.

The weld metal of the present invention further preferably comprises one or more elements selected from the group consisting of (a) Mo of 0.95% or less (excluding 0%), Ti of less than 0.040% (excluding 0%); V of 0.60% or less (excluding 0%); and Cu of 1.0% or less (excluding 0%); (b) Zr of 0.10% or less (excluding 0%); and (c) B of 0.0050% or less (excluding 0%). Depending on the kind of elements, properties of the weld metal is further improved.

In a preferable embodiment of the present invention, the weld metal is formed by the submerged arc welding.

A solid wire for submerged arc welding according to the present invention comprises C of 0.07% to 0.20%; Si of 0.05% to 1.60%; Mn of 1.30% to 3.20%; Ni of 1.00% to 3.70%; Cr of 0.3% to 2.2%; and Mo of 2.0% or less (including 0%) per total mass of the wire, wherein the remainder consists of iron and inevitable impurities.

This solid wire for submerged arc welding satisfies the following formula 1, where a Mn content (%), a Ni content (%), a Cr content (%), and Mo content (%) are defined as [Mn], [Ni], [Cr], and [Mo], respectively.

[Formula 1]

$$1.4 \leqq \frac{([Mn] + [Ni])}{([Cr] + [Mo])} \leqq 4.0 \quad \cdots \quad (A)$$

In addition to each composition described above, the wire may comprise at least one element of Cu of 0.07% to 0.40%, V of 0.019% or less, Zr of 0.050% or less, Ti of 0.010% or less, and B of 0.0050% or less per total mass of the wire.

[Advantage of the Invention]

According to the present invention, a weld metal having excellent resistance to hydrogen embrittlement can be achieved even when a tensile strength is a high strength of more than 780 MPa because the particle number density and the volume fraction of the retained austenite particles as well as the chemical composition are appropriately controlled.

BRIEF DESCRIPTION OF DRAWINGS

Fig. 1 is a schematic view illustrating a groove shape when a weld metal is prepared.
Fig. 2 is a schematic view illustrating a shape of a test specimen for carrying out a tensile test.
Fig. 3 is a schematic view illustrating a large size test specimen for measuring a hydrogen storage amount by the SSRT method.

MODE FOR CARRYING OUT THE INVENTION

The inventors of the present invention have improved the resistance to hydrogen embrittlement measured by the SSRT test by controlling the retained austenite morphology and oxide morphology in the invention of Patent Literature 7 (hereinafter referred to as the earlier application invention).

In the earlier application invention, however, a mainly presumed welding method is a gas shielded arc welding using FCW and the heat input at the time of welding is limited to 2.5 kJ/mm or less. The earlier application invention indicates that a given retained austenite morphology is not obtained and given properties cannot be satisfied in the SSRT test when the welding heat input exceeds 2.5 kJ/mm.

Even in high efficiency welding procedure methods such as the submerged arc welding, which has many actual welding procedure examples, the weld metal having excellent resistance to hydrogen embrittlement in a large size SSRT test is required. In high efficiency submerged arc welding, a welding heat input is often 2.0 kJ/mm or more (preferably, 2.5 kJ/mm or more). Even though the weld metal is a weld metal obtained in the welding conditions having such a large heat input, the inventors of the present invention have investigated a means for achieving a weld metal indicating excellent resistance to hydrogen embrittlement when the weld metal is evaluated in the large size SSRT test. As a result, the following findings are obtained.

As the welding heat input becomes larger, the cooling rate at the time of welding becomes slower and thus decomposition of retained austenite is promoted during the cooling. In addition, a prior austenite structure becomes coarser and thus this weld metal is generally disadvantageous for the resistance for hydrogen embrittlement. Contrarily, the inventors of the present invention appropriately control the chemical composition of the weld metal, suppress the content ratio of Cr and Mn, [Cr]/[Mn] (that is, the ratio of the content of Cr, [Cr], and the content of Mn, [Mn]), and suppress the content of Ti to less than 0.040% (including 0). The inventors of the present invention have found that, when such controls are carried out, stable retained austenite is secured in a given morphology and excellent resistance to hydrogen embrittlement is obtained in the large size SSRT test even when the welding heat input is relatively large.

The biggest difference between the present invention and the earlier application invention is the Ti content in the weld metal. In the earlier application invention, the particle number density of retained austenite particles are secured and the resistance to hydrogen embrittlement is intended to be improved by setting the Ti content in the weld metal to 0.040% to 0.15% and developing fine structures from the starting points of Ti oxide. In welding having a large heat input such as the submerged arc welding, however, the cooling rate at the time of welding is slowed and thus bainite (grain boundary bainite) structure is mainly produced from the prior austenite grain boundary. As a result, the fine structures developed from the starting points of the Ti oxide cannot be sufficiently obtained. Ti itself is a ferrite forming element and has a disadvantageous action for stabilizing the retained austenite.

Consequently, in the present invention, Ti is basically not contained in the weld metal or the content of Ti is less than 0.040% when Ti is contained if necessary. This stabilizes the retained austenite. On the other hand, for preparing a finer grain boundary bainite structure, the content ratio of Cr and Mn, [Cr]/[Mn], in the weld metal is set to 0.20 or more and whereby many retained austenite particles are successfully dispersed.

However, the resistance to hydrogen embrittlement in the case of a large heat input cannot be secured by simply dispersing the same amount of retained austenite and the same number of the austenite particles as those in the earlier application invention. This is because when the heat input is large, the prior austenite structure becomes coarse as described above and this disadvantageously affects to the resistance to hydrogen embrittlement (It is the finer bainite structure in the prior austenite particles that is formed by controlling the ratio [Cr]/[Mn].).

In contrast, each retained austenite particle is stabilized by setting the Ti content in the weld metal to less than 0.040%. Even when the heat input is large, excellent resistance to hydrogen embrittlement can be obtained. In other words, although the retained austenite may contribute the improvement of the resistance to hydrogen embrittlement by trapping hydrogen inside of the retained austenite, the retained austenite partially causes martensite transformation by pulling during the SSRT test, resulting in loss of the hydrogen trapping effect. Reduction in the Ti content stabilizes the retained austenite and suppresses the martensite transformation during the SSRT test and thus the resistance to hydrogen embrittlement may be improved.

Nb, which is a ferrite forming element, has a disadvantageous action from the viewpoint of retained austenite stabilization and thus is controlled as an impurity level (less than 0.01%) in the present invention and is not positively added.

In this specification, "high strength" means a tensile strength TS of more than 780 MPa and preferably means a tensile strength of about 800 MPa to 980MPa.

In this specification, the weld metal having "excellent resistance to hydrogen embrittlement" means a weld metal that satisfies a breaking elongation of more than 2.0% when a large size test specimen is used when the resistance to hydrogen embrittlement is evaluated in accordance with the method in Examples described below.

Hereinafter, constitutional requirement of the present invention will be described in detail.

As described above, the weld metal of the present invention comprises C of 0.02% to 0.12%; Si of 0.18% to 2.00%; Mn of 0.90% to 2.5%; Ni of 1.0% to 3.5%; Cr of 0.3% to 2.0%; Al of 0.030% or less (excluding 0%); N of 0.015% or less (excluding 0%); and O of 0.050% or less (excluding 0%); wherein the remainder consists of iron and inevitable impurities; the weld metal comprises 2500 particles/mm$^2$ or more of retained austenite particles having a circle-equivalent diameter of 0.15 $\mu$m or more; a volume fraction of a retained austenite phase is 4.3% or more relative to entire structures; and a content ratio of Cr and Mn, [Cr]/[Mn], is 0.20 or more.

First, the retained austenite which characterizes the weld metal of the present invention will be described.

As described above, in the present invention, the retained austenite particles in the weld metal are controlled to 2500 particles/mm$^2$ or more and the volume fraction (a ratio relative to the entire structures) of the retained austenite is controlled to 4.3% or more. According to the present invention, the weld metal having excellent resistance to hydrogen embrittlement can be obtained because the retained austenite particles are dispersed in an appropriate particle number density.

In the present invention, the above requirements are particularly defined for the retained austenite that exists in an as welded zone in the weld metal. This is because the retained austenite amount is easy to be evaluated in an accurate manner because the welded zone in a final pass is not affected by the heat of subsequent pass at the time welding, while the retained austenite in the weld metal is decomposed by an effect of the subsequent pass at the time of welding and thus the amount of the retained austenite easily varies depending on a measurement position particularly in a repeatedly heated part.

The retained austenite can be a trapping site for diffusive hydrogen and thus it has been already reported that the retained austenite is a structure that has a reduction action in the diffusive hydrogen and contributes to improvement of the resistance to hydrogen embrittlement. Although the amount (a ratio in the entire structure) of the retained austenite alone has been mostly defined, however, the dispersion state (particle number density) has not been noted at all. According to the result of the investigation obtained by the inventors of the present invention, however, it has been clear that no matter how the amount of the retained austenite alone is controlled, desired resistance to hydrogen embrittlement cannot be obtained as long as the dispersion state of the weld metal is not appropriately controlled (for example, refer to Experiment Nos. 39 and 43 in Table 7 in Examples).

In other words, it becomes clear that, in order to obtain a weld metal having excellent resistance to hydrogen embrittlement, the trapping effect of diffusive hydrogen is achieved to a maximum extent and the resistance to hydrogen embrittlement is significantly improved by securing the amount of the retained austenite that acts as a trapping site for diffusive hydrogen and dispersing the retained austenite particles so that the retained austenite particle number density is increased (specifically 2,500 particles/mm$^2$ or more) by forming a finer matrix structure. For example, both of Experiment No. 39 and Experiment No. 43 in Table 7 in Examples described below are examples in which the volume fraction of the retained austenite particles is 4.3% or more, which is defined in the present invention, and the given amount of the retained austenite exists. However, the resistance to hydrogen embrittlement when the large size test specimen is used deteriorates because the weld metal does not have the given particle number density (the dispersion state is not appropriate).

From the viewpoint of improving the resistance to hydrogen embrittlement, as the particle number density of the retained austenite particles becomes larger, the resistance to hydrogen embrittlement becomes better. The particle number density is preferably 3000 particles/mm$^2$ or more and more preferably 3300 particles/mm$^2$ or more. The upper limit of the particle number density is not particularly limited from the viewpoint of improving the resistance to hydrogen embrittlement. For example, the upper limit may be 7500 particles/mm$^2$ or less.

From the viewpoint of improving the resistance to hydrogen embrittlement, as the volume fraction of the retained austenite phase existing in the entire structures becomes higher, the resistance to hydrogen embrittlement becomes better. The volume fraction is preferably 4.7% or more and more preferably 5.0% or more. The upper limit of the volume fraction was not particularly limited from the viewpoint of improving the resistance to hydrogen embrittlement. For example, the upper limit may be 10% or less, preferably 9% or less, and more preferably 8% or less in consideration of reduction in yield stress in the case of excessive existence of the retained austenite phase.

In the present invention, the amount (volume fraction) of the retained austenite phase and the particle number density of the retained austenite particles are controlled in the structures constituting the weld metal. The structures except the retained austenite are not limited at all and may be any structures usually contained in the weld metal. Specifically, bainite is contained as a main structure (a structure contained in an amount of 50% or more, preferably 70% or more, and more preferably 90% or more in a volume fraction relative to the entire structures) and, grain boundary ferrite, martensite, and the like may be contained in addition to bainite. Any of bainite, grain boundary ferrite, and martensite described above is a type of "ferrite phase". The fraction of retained austenite measured by the method (Examples) described below is a ratio relative to the total amount of retained austenite, bainite, grain boundary ferrite, and martensite. The amount of bainite can be determined as an approximate area fraction by structure observation using a light microscope.

Subsequently, the chemical composition in the weld metal of the present invention will be described.

[C: 0.02% to 0.12%]

C is an essential element for securing the strength of the weld metal. In order to achieve such an effect, the lower limit of a C content is set to 0.02% or more. The lower limit of the C content is preferably 0.04% or more and more preferably 0.05% or more. When the C content is more than 0.12%, however, the susceptibility to hydrogen embrittlement is increased (that is, the resistance to hydrogen embrittlement deteriorate) by excessive increase in the strength, and thus the upper limit is set to 0.12% or less. The upper limit of the C content is preferably 0.10% or less and more preferably 0.08% or less.

[Si: 0.18% to 2.00%]

Si has the action of retarding formation of carbide by existing in a solid solution state and stabilizing retained austenite. When a Si content is less than 0.18%, given retained austenite cannot be secured and the above action is not effectively achieved. Consequently, the lower limit of the Si content is set to 0.18% or more. The lower limit is preferably 0.30% or more and more preferably 0.35% or more. On the other hand, when the Si content is excessive, the susceptibility of hydrogen embrittlement is increased by excessive increase in the strength and thus the upper limit is controlled to 2.00% or less. The upper limit is preferably 1.5% or less and more preferably 1.0% or less.

[Mn: 0.90% to 2.5%]

Mn is a necessary element for securing the strength of the weld metal. In order to achieve such an effect, the lower limit of a Mn content is set to 0.90% or more. The lower limit is preferably 1.2% or more and more preferably 1.4% or more. When the Mn content is more than 2.5%, however, the susceptibility of hydrogen embrittlement is increased by significant increase in the strength and thus the upper limit is set to 2.5% or less. The upper limit is preferably 2.2% or less and more preferably 2.0% or less.

[Ni: 1.0% to 3.5%]

Ni is a necessary element for securing the strength of the weld metal. In order to achieve such an effect, the lower limit of a Ni content is set to 1.0% or more. The lower limit is preferably 1.2% or more and more preferably 1.5% or more. When the Ni content is excessive in more than 3.5%, however, the susceptibility of hydrogen embrittlement is increased by excessive increase in the strength and thus the upper limit is set to 3.5% or less. The upper limit is preferably 3.0% or less and more preferably 2.8% or less.

[Cr: 0.3% to 2.0%]

Cr is an element for contributing fine dispersion of retained austenite particles by forming finer grain boundary bainite structure. In order to achieve such an effect, the lower limit of a Cr content is set to 0.3% or more. The lower limit is preferably 0.4% or more and more preferably 0.5% or more. When the Cr content is excessive in more than 2.0%, however, the susceptibility of hydrogen embrittlement is increased by excessive increase in the strength and thus the upper limit is set to 2.0% or less. The upper limit is preferably 1.8% or less and more preferably 1.5% or less.

[Al: 0.030% or less (excluding 0%)]

Al is added as a deoxidation element. When Al is excessively added, the strength excessively increases due to formation of AlN to deteriorate resistance to hydrogen embrittlement and thus the upper limit is set to 0.030% or less. The upper limit is preferably 0.025% or less and more preferably 0.020% or less.

[N: 0.015% or less (excluding 0%)]

N is one of the inevitably mixed elements, and is industrially difficult to be 0%. N is effective for improving the strength of the weld metal. When N is excessively contained, however, the susceptibility of hydrogen embrittlement is increased by excessive increase in the strength. Consequently, the upper limit of the N content is 0.015% or less. The upper limit is preferably 0.010% or less and more preferably 0.006% or less.

[O: 0.050% or less (excluding 0%)]

O is one of the inevitably obtained elements in the weld metal, and is industrially difficult to be 0%. When an O content is more than 0.050%, Si oxide is formed to decrease Si solid solution and thus the amount of retained austenite cannot be secured. Consequently, the upper limit of the O content is set to 0.050% or less. The upper limit is preferably 0.045% or less and more preferably 0.040% or less.

The basic components contained in the weld metal of the present invention are as described above and the remainder is iron and inevitable impurities. Examples of the inevitable impurities may include elements (for example, P and S) that are brought depending on circumstance of raw materials, materials, and production facilities. The impurities, however, reduces grain boundary strength and promotes low-temperature cracking by segregating at the grain boundary, and thus is preferably suppressed to P of 0.02% or less (excluding 0%) and S of 0.025% or less (excluding 0%).

The basic components in the weld metal of the present invention are described above. As other elements, (a) one or more elements selected from the group consisting of Mo of 0.95% or less (excluding 0%), Ti of less than 0.040% (excluding 0%); V of 0.60% or less (excluding 0%); and Cu of 1.0% or less (excluding 0%); (b) Zr of 0.10% or less (excluding 0%), and (C) B of 0.0050% or less (excluding 0%) may be further contained. Depending on the contained species of the elements, properties of the weld metal is further improved. The elements included in (a), (b), and (c) are contained singly or in appropriate combination.

[One or more elements selected from the group consisting of Mo of 0.95% or less (excluding 0%), Ti of less than 0.040% (excluding 0%); V of 0.60% or less (excluding 0%); and Cu of 1.0% or less (excluding 0%)]

Mo, Ti, V, and Cu are useful as elements for improving the strength of the weld metal. These elements may be used singly or in combination of two or more of them. Among them, Mo is an effective element for securing the strength. When Mo is excessively contained, because the strength excessively increases and whereby the resistance to hydrogen embrittlement deteriorates. Consequently, the upper limit is preferably set to 0.95% or less. The upper limit is more preferably 0.85% or less and further preferably 0.50% or less. A Mo content for obtaining the effect of improving the strength is preferably 0.05% or more and more preferably 0.20% or more.

Although Ti is effective for improving the strength, Ti also has an action for destabilizing the retained austenite. When a Ti content becomes excessive, retained austenite transforms into martensite by stress-induced transformation at the time of large-size SSRT test and thus the excellent resistance to hydrogen embrittlement cannot be secured. From this viewpoint, the Ti content is preferably less than 0.040%. The Ti content is more preferably 0.035% or less and further preferably 0.030% or less. The Ti content for obtaining the effect of improving the strength is preferably 0.010% or more and more preferably 0.015% or more.

V and Cu are useful as elements for improving the strength of the weld metal. In order to achieve such an effect, the preferable lower limits of V and Cu are 0.02% or more and 0.50% or more, respectively. When contents of these elements become excessive, however, the susceptibility of hydrogen embrittlement is increased by excessive increase in the strength. Consequently, the upper limits of each element are suppressed so that V the upper limit of V is preferably 0.60% or less (more preferably 0.05% or less and further preferably 0.40% or less) and the upper limit of Cu is preferably 1.0% or less (more preferably 0.5% or less and further preferably 0.2% or less).

[Zr: 0.10% or less (excluding 0%)]

Zr is a strong deoxidation element and has an action of promoting increase in retained austenite caused by increase in Si solid solution. The preferable lower limit for effectively achieving such an action is 0.010% or more. When a Zr content becomes excessive, however, the intragranular ferrite nucleated on the oxide decreases to form coarse structures, and whereby the susceptibility of hydrogen embrittlement increases. Consequently, the upper limit of the Zr content is preferably suppressed to 0.10% or less (more preferably 0.050% or less).

[B: 0.0050% or less (excluding 0%)]

B is an element to contribute to improvement of the strength by suppressing ferrite generation from prior austenite grain boundaries. In order to effectively achieve such an action, the lower limit of the B content is preferably set to 0.0010% or more. When the B content is excessive, however, the susceptibility of hydrogen embrittlement is increased by excessive increase in the strength and thus the upper limit is preferably suppressed to 0.0050% or less (more preferably 0.0030% or less).

[Ratio [Cr]/[Mn]: 0.20 or more]

The ratio of the contents of Cr and Mn, [Cr]/[Mn], is suppressed to 0.20 or more and whereby the finer bainite structure from the prior austenite grain boundary is formed and retained austenite particles can be dispersed in a high density. The ratio is preferably 0.25 or more and more preferably 0.40 or more.
Subsequently, a method for preparing the weld metal of the present invention will be described.
Welding methods for preparing the weld metal of the present invention is not limited. Submerged arc welding (SAW), which has a large heat input and excellent welding efficiency, is preferable. In SAW, the wire and the flux described below are used for obtaining the weld metal that satisfies given retained austenite morphology.
The heat input at the time of welding is also affected and preferably set to 2.0 kJ/mm or more and 3.0 kJ/mm or less. When the heat input at the time of welding is more than 3.0 kJ/mm, the cooling rate at the time of welding is slowed and decomposition of retained austenite is promoted. As a result, desired retained austenite particles (the particle number density and the volume fraction) cannot be obtained. The heat input at the time of welding is preferably 2.8 kJ/mm or less. As the heat input becomes smaller, better properties are obtained. From the viewpoint of the welding efficiency, however, the heat input at the time of welding is preferably set to 2.0 kJ/mm or more. The heat input at the time of welding is more preferably set to 2.5 kJ/mm or more.
The wire is a wire comprising C of 0.07% to 0.20%; Si of 0.05% to 1.60%; Mn of 1.30% to 3.20%; Ni of 1.00% to 3.70%; Cr of 0.3% to 2.2%; and Mo of 2.0% or less (including 0%) per total mass of the wire, wherein the remainder consists of iron and inevitable impurities is used.
The wire is preferably a wire comprising C of 0.08% to 0.20%; Si of 0.05% to 0.50%; Mn of 1.50% to 3.00%; Ni of 1.00% to 1.95%; Cr of 0.5% to 1.5%; and Mo of 0.10% to 0.45%, wherein P is controlled to 0.015% or less and S is controlled 0.015% or less, and the remainder consists of iron and inevitable impurities.

[C: 0.07% to 0.20%]

C is an essential element for securing the strength of the weld metal. When a C content is less than 0.07%, the strength of the weld metal becomes insufficient and an effect of stabilizing toughness becomes insufficient. On the other hand, when the C content is more than 0.20%, the strength becomes excessive and the low-temperature toughness of the weld metal deteriorates. Consequently, the C content is set to 0.07% to 0.20%.
From the viewpoint of improving the strength and stabilization of the toughness of the weld metal, the C content is preferably 0.10% or more whereas from the viewpoint of improving the low-temperature toughness, the C content is preferably set to 0.15% or less.

[Si: 0.05% to 1.60%]

Si exists in a state of solid solution in the weld metal and thus has actions in which formation of carbides is slowed and retained austenite is stabilized. When a Si content is less than 0.05%, however, the strength and the toughness of the weld metal deteriorate due to insufficient deoxidation. When the Si content is more than 1.50%, ferrite in the matrix becomes brittle and the low-temperature toughness of the weld metal deteriorates. Consequently, the Si content is set to 0.05% to 1.60%. From the viewpoint of improving the low-temperature toughness of the weld metal, the Si content is preferably set to 0.5% or less and more preferably 0.20% or less.

[Mn: 1.30% to 3.20%]

Mn is a necessary element for securing the strength of the weld metal. When a Mn content is less than 1.30%, however, the strength of the weld metal becomes insufficient and the low-temperature toughness also deteriorates. When the Mn content is more than 3.20%, the strength and quenching properties are excessive and thus the low-temperature toughness deteriorates. Consequently, the Mn content is set to 1.30% to 3.20%.
From the viewpoint of improving the strength and the toughness of the weld metal, the Mn content is preferably set to 1.50% or more and particularly preferably 1.80% or more, whereas from the viewpoint of the low-temperature toughness, the Mn content is preferably set to 3.00% or less and particularly preferably 2.40% or less.

[Ni: 1.00% to 3.70%]

Ni is a necessary element for securing the strength and the toughness of the weld metal. When a Ni content is less than 1.00%, however, the effect of improving the strength and the toughness of the weld metal is insufficient. In addition, the required amount of retained austenite cannot be obtained and thus the resistance to hydrogen embrittlement deteriorates. On the other hand, when the Ni content is more than 3.70%, the low-temperature toughness deteriorates. Consequently, the Ni content is set to 1.00% to 3.70%.
From the viewpoint of improving the strength and the toughness of the weld metal, the Ni content is preferably set to 1.60% or more, whereas from the viewpoint of the low-temperature toughness, the Ni content is preferably is set to 1.95% or less and particularly preferably 1.90% or less.

[Cr: 0.3% to 2.2%]

Cr is an element for contributing formation of finer retained austenite particles by forming a finer grain boundary bainite structure. When a Cr content is less than 0.3%, the quenching properties of the weld metal significantly deteriorate and transformation temperature rises. As a result, both of the strength and the low-temperature toughness deteriorate. When the Cr content is more than 2.2%, generation of the retained austenite is suppressed and thus the required amount of the retained austenite cannot be obtained. As a result, the resistance to hydrogen embrittlement of the weld metal deteriorates. Consequently, the Cr content is set to 0.3% to 2.2%.
From the viewpoint of improving the strength and the low-temperature toughness, the Cr content is preferably set to 0.5% or more and particularly preferably 0.9% or more, whereas from the viewpoint of improving the resistance to hydrogen embrittlement of the weld metal, the Cr content is preferably set to 1.5% or less and particularly preferably 1.2% or less.

[Mo: 2.0% or less (including 0%)]

Mo is a useful element for improving the strength of the weld metal. When a Mo content is more than 2.0%, generation of retained austenite is suppressed and thus the required amount of retained austenite cannot be obtained. As a result, the resistance to hydrogen embrittlement of the weld metal deteriorates. Consequently, the Mo content is set to 2.0% or less.
From the viewpoint of improving the strength and the low-temperature toughness, the Mo content is preferably set to 0.10% or more and particularly preferably 0.20% or more, whereas from the viewpoint of improving the resistance to hydrogen embrittlement of the weld metal, the Mo content is preferably set to 0.45% or less and particularly preferably 0.40% or less.
In addition to the above elements, the following elements preferably satisfy the following requirements.

[P: 0.015% or less]

P significantly deteriorates the low-temperature toughness of the weld metal. Specifically, when a P content is more than 0.015%, the low-temperature toughness of the weld metal is insufficient. Consequently, the P content is controlled to 0.015% or less. From the viewpoint of improving the low-temperature toughness, the P content is preferably controlled to 0.010% or less.

[S: 0.015% or less]

S significantly deteriorates the low-temperature toughness of the weld metal. Specifically, when a S content is more than 0.015%, the low-temperature toughness of the weld metal is insufficient. Consequently, the S content is controlled to 0.015% or less. From the viewpoint of improving the low-temperature toughness, the P content is preferably controlled to 0.007% or less.

[([Mn] + [Ni])/([Cr] + [Mo]): 1.4 to 4.0]

According to the composition of each component described above, both of the low-temperature toughness and the resistance to hydrogen embrittlement of the weld metal can be secured. The inventors of the present invention have found that the low-temperature toughness and the resistance to hydrogen embrittlement can be further improved by setting a ratio of the total content of Cr and Mo and the total content of Mn and Ni (= [([Mn] + [Ni])/([Cr] + [Mo])) to a specific range.

Specifically, when ([Mn] + [Ni])/([Cr] + [Mo]) is set in a range of 1.4 to 4.0, generation of retained austenite in the weld metal is prompted. This allows a matrix to be reinforced, formation of finer structure to be achieved by controlling the transformation temperature, and the strength to be balanced. As a result, the low-temperature toughness and the resistance to hydrogen embrittlement of the weld metal can be significantly improved.

The following components can be further contained.

[Cu: 0.07% to 0.40%]

Cu has small contribution to the strength and the low-temperature toughness of the weld metal and thus does not need to be positively added to the wire body. However, Cu plating to the wire surface provides a significant anti-rust effect. When a Cu content is less than 0.07%, however, the anti-rust effect is small, whereas when the Cu content is more than 0.40%, feeding properties of the wire deteriorate. Consequently, when the Cu plating is applied to the solid wire of this embodiment, the Cu content is preferably set to 0.07% to 0.40%.

[V: 0.019% or less]

V is an element that increases strength, particularly proof strength due to precipitation strengthening by adding a small amount of V and thus can be added if necessary. When a V content is more than 0.019%, however, the strength of the weld metal is increased and the low-temperature toughness deteriorates. At the same time, a required amount of retained austenite cannot be obtained due to inhibition of generation of retained austenite and thus the resistance to hydrogen embrittlement deteriorates. Consequently, when V is added, the amount added is set to 0.019% or less.

[Zr: 0.050% or less]

Similar to V, Zr is an element that increases strength, particularly proof strength due to precipitation strengthening by adding a small amount of Zr and thus can be added if necessary. When a Zr content is more than 0.050%, however, the strength of the weld metal is increased and the low-temperature toughness deteriorates. At the same time, a required amount of retained austenite cannot be obtained due to inhibition of generation of retained austenite and thus the resistance to hydrogen embrittlement deteriorates. Consequently, when Zr is added, the amount added is set to 0.050% or less

[Ti: 0.010% or less]

Similar to V and Zr, Ti is an element that increases strength, particularly proof strength due to precipitation strengthening by adding a small amount of Ti and thus can be added if necessary. When a Ti content is more than 0.010%, however, the strength of the weld metal is increased and the low-temperature toughness deteriorates. At the same time, a required amount of retained austenite cannot be obtained due to inhibition of generation of retained austenite and thus the resistance to hydrogen embrittlement deteriorates. Consequently, when Ti is added, the amount added is set to 0.010% or less.

[B: 0.0050% or less]

B has an effect of suppressing ferrite generation from the prior austenite grain boundary to improve the strength of the weld metal. When the B content is more than 0.0050% by mass, however, the strength of the weld metal significantly increases and whereby the resistance to hydrogen embrittlement deteriorates. Consequently, when B is added, the amount added is set to 0.0050% or less.

[Remainder]

The remainder in the solid wire of this embodiment is Fe and inevitable impurities. Examples of the inevitable impurities in the solid wire of this embodiment include O, N, Al, Nb, Ca, and Mg.

The solid wire is preferably used in combination with a sintered flux. The composition of the flux is not particularly limited. For example, a flux containing MgO of 25% to 35%, $Al_2O_3$ of 10% to 20%, $CaF_2$ of 12% to 22%, $SiO_2$ of 8% to 18%, metal carbonates (a value in terms of $CO_2$) of 3% to 9%, CaO of 10% to 15%, and metal Si of 1% to 4% per total mass of the flux can be used.

<MgO: 25% to 35%>

MgO has actions for increasing basicity of the flux and reducing oxygen in the weld metal as a deoxidation agent. Consequently, MgO has an effect of oxygen reduction and further improves fire resistance of slag. When a MgO content in the flux is less than 25%, however, the actions are not achieved. When the flux having the MgO content of more than 35% is used, slag may be peeled and bead appearance may deteriorate. Consequently, the MgO content of the flux is preferably 25% to 35%.

<$Al_2O_3$: 10% to 20%>

$Al_2O_3$ has an action as a slag formation agent and an effect for securing slag removability of beads. $Al_2O_3$ also has an effect for improving concentrating properties and stability of arc. When an $Al_2O_3$ content in the flux is less than 10%, however, the slag removability deteriorates and arc becomes unstable. As a result, welding may be difficult to carry out. When the $Al_2O_3$ content in the flux is more than 20%, the oxygen in the weld metal increases and thus toughness may deteriorate. Consequently, the $Al_2O_3$ content in the flux is preferably 10% to 20%.

<$CaF_2$: 12% to 22%>

$CaF_2$ has an action for adjusting the melting point of the generated slag, which is generally known, and an effect for reducing the oxygen in the weld metal. When a $CaF_2$ content in the flux is less than 12%, however, this action and this effect cannot be obtained, whereas when the $CaF_2$ content in the flux is more than 22%, arc may become unstable, bead appearance may deteriorate, and pock-marks may be generated. Consequently, the $CaF_2$ content in the flux is preferably 12% to 22%.

<$SiO_2$: 8% to 18%>

$SiO_2$ has an action for fixing the bead appearance and a bead shape as a slag forming agent. When the $SiO_2$ content in the flux is less than 8%, however, this effect is not excreted, whereas when the $SiO_2$ content in the flux is more than 18%, the oxygen in the weld metal increases and thus toughness may deteriorate. Consequently, the $SiO_2$ content of the flux is preferably 8% to 18%.

<Metal carbonates (value in terms of $CO_2$): 3% to 9% >

The metal carbonate has an arc shield effect in which the metal carbonate is evaporated by welding heat to reduce the partial pressure of moisture vapor in an arc atmosphere and to reduce an amount of the diffusive hydrogen in the weld metal. When the metal carbonate content in the flux is less than 3% in terms of $CO_2$, however, this effect cannot be obtained.

On the other hand, when the metal carbonate content in the flux is more than 9% in terms of $CO_2$, removability of slag may deteriorate and pock-marks may be generated. As a result, workability may be worsened. Consequently, the metal carbonate content in the flux is preferably 3% to 9% in terms of $CO_2$. Examples of the metal carbonate added to the flux may include $CaCO_3$ and $BaCO_3$.

<CaO: 10% to 15%>

CaO has an effect for increasing basicity of the flux and reducing oxygen in the weld metal. When a CaO content of the flux is less than 10%, however, this effect is not achieved. On the other hand, when the CaO content of the flux is more than 15%, arc stability and bead appearance deteriorate. Consequently, CaO in the flux is preferably 10% to 15%.

<Metal Si: 1% to 4%>

Metal Si has a deoxidation effect that suppresses the amount of oxygen in the weld metal. When a metal Si content of the flux is less than 1%, however, this effect is not achieved. On the other hand, the metal Si content of the flux is more than 4%, the deoxidation effect does not increase and the bead shape of the weld metal deteriorates as well as the strength increases and the toughness decrease. Consequently, the metal Si content in the flux is preferably 1% to 4%. Here, the metal Si is added to the flux in the form of a Fe-Si alloy, a Fe-Si-Mn alloy, and the like.

<Other components>

Examples of the other components except the components described above in the flux include components in the metal carbonates except the value in terms of $CO_2$, alkali metal oxides, and inevitable impurities.
The solid wire described above in detail can control retained austenite and improve the resistance to hydrogen embrittlement and the low-temperature toughness of the weld metal.

[Examples]

Hereinafter, the present invention will be described in detail with reference to Examples. However, the present invention is not intended to be limited to Examples and can be carried out by appropriate modification as long as the modification is suitable for the scope of the present invention described above and below. The modification is included in a technical range of the present invention.

Example 1

Weld metals were prepared by the following welding conditions (A) using combinations of fluxes (F1 to F9) having the chemical compositions listed in Table 1 and wires (W1 to W52) having the chemical compositions listed in Tables 2 and 3. In Table s 2 and 3, "-" means the component is not added (not contained).

[Table 1]

| Flux No. | Chemical composition of flux (% by mass) | | | | | | | |
|---|---|---|---|---|---|---|---|---|
| | MgO | CaF$_2$ | Al$_2$O$_3$ | SiO$_2$ | CaO | CO$_2$ | Si | Others* |
| F1 | 28 | 21 | 13 | 12 | 11 | 6 | 2 | 7 |
| F2 | 28 | 21 | 13 | 9 | 11 | 6 | 2 | 10 |
| F3 | 26 | 20 | 13 | 15 | 11 | 6 | 2 | 7 |
| F4 | 28 | 21 | 13 | 12 | 11 | 6 | 1.2 | 7.8 |
| F5 | 27 | 20 | 13 | 12 | 11 | 6 | 3.5 | 7.5 |
| F6 | 28 | 21 | 13 | 7 | 11 | 6 | 2 | 12 |
| F7 | 24 | 18 | 13 | 19 | 11 | 6 | 2 | 7 |
| F8 | 28 | 21 | 13 | 12 | 11 | 6 | 0.9 | 8.1 |
| F9 | 26 | 20 | 13 | 12 | 11 | 6 | 5 | 7 |
| * Others: CO$_2$, Si, NaO$_2$, etc. | | | | | | | | |

[Table 2]

| Wire No | Chemical composition of welding were ** (% by mass) | | | | | | | | | | | | | |
|---|---|---|---|---|---|---|---|---|---|---|---|---|---|---|
| | C | Si | Mn | Ni | Cr | Mo | Al | N | O | Ti | V | Cu | Zr | B |
| W1 | 0.16 | 0.16 | 2.1 | 2.5 | 0.8 | - | 0.002 | 0.004 | 0.012 | - | - | - | - | - |
| W2 | 0.14 | 0.13 | 2.4 | 1.8 | 0.4 | - | 0.002 | 0.004 | 0.012 | - | - | 0.12 | - | 0.0012 |
| W3 | 0.17 | 0.16 | 2.1 | 2.6 | 0.8 | - | 0.002 | 0.004 | 0.012 | - | - | 0.12 | - | - |
| W4 | 0.14 | 0.14 | 2.4 | 1.8 | 0.4 | - | 0.003 | 0.004 | 0.011 | 0.130 | - | 0.12 | - | 0.0011 |
| W5 | 0.11 | 0.14 | 2.0 | 2.5 | 0.9 | 0.72 | 0.003 | 0.004 | 0.011 | | - | - | - | - |
| W6 | 0.14 | 0.16 | 2.0 | 2.6 | 0.7 | 0.08 | - | 0.004 | 0.011 | - | - | - | - | - |
| W7 | 0.14 | 0.14 | 1.8 | 2.2 | 0.4 | 0.51 | 0.002 | 0.006 | 0.011 | - | - | 0.12 | - | - |
| W8 | 0.14 | 0.14 | 1.5 | 2.2 | 0.4 | 0.06 | 0.002 | 0.008 | 0.011 | - | - | 0.12 | - | - |
| W9 | 0.14 | 0.17 | 1.8 | 1.8 | 0.7 | 0.36 | 0.002 | 0.006 | 0.010 | - | - | 0.13 | - | - |
| W10 | 0.14 | 0.14 | 2.3 | 1.8 | 1.0 | 0.05 | 0.002 | 0.009 | 0.011 | - | - | 0.12 | - | - |
| W11 | 0.11 | 0.14 | 1.8 | 2.2 | 0.4 | 0.55 | 0.002 | 0.004 | 0.010 | 0.040 | 0.015 | 0.12 | - | 0.0013 |
| W12 | 0.09 | 0.14 | 1.7 | 1.4 | 1.4 | 0.40 | 0.002 | 0.004 | 0.011 | - | 0.411 | 0.33 | - | 0.0010 |
| W13 | 0.11 | 0.14 | 1.7 | 1.8 | 0.7 | 0.38 | 0.002 | 0.004 | 0.012 | - | - | 0.12 | - | 0.0010 |
| W14 | 0.11 | 0.13 | 1.8 | 1.4 | 0.7 | 0.38 | 0.002 | 0.004 | 0.012 | - | 0.014 | 0.12 | - | 0.0010 |
| W15 | 0.11 | 0.14 | 1.6 | 1.4 | 1.0 | 2.00 | 0.002 | 0.004 | - | - | - | 0.21 | 0.25 | 0.0010 |
| W16 | 0.07 | 0.11 | 1.6 | 1.7 | 1.6 | 0.07 | - | 0.009 | 0.011 | - | - | 0.13 | - | 0.0010 |
| W17 | 0.17 | 0.81 | 1.9 | 3.1 | 1.5 | 0.38 | 0.005 | 0.009 | 0.012 | - | - | 0.13 | - | 0.0012 |
| W18 | 0.07 | 1.00 | 2.4 | 2.0 | 1.9 | 0.24 | - | 0.007 | 0.012 | - | 0.058 | 0.13 | - | 0.0015 |
| W19 | 0.11 | 0.14 | 1.3 | 2.3 | 2.1 | 0.65 | 0.005 | 0.004 | 0.017 | - | - | 0.13 | - | 0.0010 |
| W20 | 0.11 | 0.14 | 3.2 | 1.9 | 1.7 | 0.11 | 0.004 | 0.004 | 0.011 | - | - | 0.12 | - | - |
| W21 | 0.14 | 0.11 | 2.1 | 1.2 | 1.1 | 0.07 | 0.002 | 0.004 | 0.012 | - | - | 0.12 | - | - |
| W22 | 0.14 | 0.14 | 2.0 | 3.7 | 0.9 | 0.50 | 0.002 | 0.004 | 0.011 | 0.090 | - | 0.13 | 0.11 | 0.0010 |
| W23 | 0.14 | 0.14 | 1.8 | 2.1 | 0.3 | 0.29 | - | 0.004 | 0.011 | - | - | 0.16 | | 0.0010 |
| W24 | 0.11 | 0.14 | 2.4 | 1.6 | 2.2 | 0.81 | - | 0.004 | 0.011 | 0.150 | 0.156 | 0.13 | - | 0.0010 |
| W25 | 0.17 | 0.14 | 1.6 | 2.7 | 0.5 | 0.93 | - | 0.006 | 0.011 | - | - | 0.43 | - | 0.0020 |
| W26 | 0.11 | 0.14 | 2.6 | 1.4 | 0.8 | 0.20 | 0.01 | 0.006 | 0.016 | 0.070 | 0.093 | 0.24 | - | 0.0010 |
| ** Remainder: Iron and inevitable impurities | | | | | | | | | | | | | | |

[Table 3]

| Wire No. | Chemical composition of welding wire ** (% by mass) | | | | | | | | | | | | | |
|---|---|---|---|---|---|---|---|---|---|---|---|---|---|---|
| | C | Si | Mn | Ni | Cr | Mo | Al | N | O | Ti | V | Cu | Zr | B |
| W27 | 0.11 | 0.14 | 2.0 | 3.1 | 0.5 | 0.30 | 0.003 | 0.014 | 0.010 | - | - | 0.12 | - | 0.0022 |
| W28 | 0.14 | 0.17 | 1.9 | 1.8 | 1.0 | 0.55 | 0.006 | 0.004 | 0.011 | 0.190 | - | 0.11 | - | 0.0016 |
| W29 | 0.14 | 0.80 | 1.9 | 1.6 | 0.5 | 0.82 | 0.002 | 0.009 | 0.012 | - | 0.583 | 0.13 | 0.19 | 0.0029 |
| W30 | 0.14 | 0.14 | 1.7 | 1.6 | 0.5 | 0.21 | 0.006 | 0.004 | 0.011 | - | 0.244 | 0.65 | - | 0.0011 |
| W31 | 0.11 | 0.14 | 1.7 | 1.5 | 0.8 | 0.44 | - | 0.009 | 0.012 | 0.090 | - | 0.89 | - | 0.0018 |

(continued)

| Wire No. | Chemical composition of welding wire ** (% by mass) | | | | | | | | | | | | | |
|---|---|---|---|---|---|---|---|---|---|---|---|---|---|---|
| | C | Si | Mn | Ni | Cr | Mo | Al | N | O | Ti | V | Cu | Zr | B |
| W32 | 0.11 | 1.05 | 1.8 | 3.0 | 0.7 | 0.32 | 0.002 | 0.007 | 0.011 | - | 0.522 | 0.16 | 0.42 | 0.0011 |
| W33 | 0.11 | 0.14 | 2.0 | 2.7 | 0.8 | 0.69 | 0.002 | 0.004 | 0.010 | - | - | 0.13 | - | 0.0046 |
| W34 | 0.11 | 0.14 | 1.7 | 2.4 | 0.9 | 0.43 | - | 0.004 | 0.012 | - | - | 0.12 | - | 0.0010 |
| W35 | 0.04 | 0.50 | 1.9 | 1.6 | 0.7 | 0.82 | - | 0.004 | 0.011 | - | - | 0.12 | - | 0.0011 |
| W36 | 0.11 | 0.10 | 3.5 | 1.8 | 1.0 | 0.36 | 0.002 | 0.006 | 0.012 | - | - | 0.12 | - | - |
| W37 | 0.11 | 0.60 | 1.1 | 2.1 | 0.7 | 0.57 | 0.003 | 0.004 | 0.011 | - | - | 0.13 | - | - |
| W38 | 0.11 | 0.10 | 1.9 | 4.0 | 0.4 | 0.40 | 0.006 | 0.003 | 0.011 | - | - | 0.13 | - | - |
| W39 | 0.20 | 0.13 | 2.2 | 2.0 | 0.3 | 0.41 | 0.006 | 0.004 | 0.012 | - | - | 0.12 | - | - |
| W40 | 0.11 | 0.09 | 2.6 | 2.6 | 1.5 | 0.73 | - | 0.009 | 0.010 | - | - | 0.13 | - | - |
| W41 | 0.11 | 1.88 | 2.0 | 2.5 | 0.4 | 0.68 | - | 0.004 | 0.012 | - | - | 0.19 | - | 0.0010 |
| W42 | 0.14 | 0.17 | 2.7 | 0.9 | 0.4 | 0.42 | - | 0.007 | 0.019 | - | - | 0.12 | - | 0.0010 |
| W43 | 0.14 | 0.17 | 2.7 | 1.5 | 0.4 | 0.43 | - | 0.007 | 0.015 | - | - | 0.12 | - | 0.0010 |
| W44 | 0.11 | 0.14 | 2.2 | 1.7 | 2.4 | 0.30 | 0.002 | 0.007 | 0.011 | - | - | 0.12 | - | 0.0014 |
| W45 | 0.11 | 0.13 | 2.8 | 3.0 | 0.6 | 0.99 | 0.002 | 0.004 | 0.011 | - | - | 0.12 | - | 0.0015 |
| W46 | 0.11 | 0.13 | 2.5 | 1.4 | 0.7 | 0.15 | 0.012 | 0.004 | 0.011 | - | - | 0.13 | - | 0.0011 |
| W47 | 0.14 | 0.14 | 1.8 | 2.3 | 0.8 | 0.53 | 0.002 | 0.018 | 0.010 | - | - | 0.12 | - | 0.0012 |
| W48 | 0.11 | 0.14 | 1.8 | 2.1 | 0.6 | 0.03 | - | 0.004 | 0.010 | 0.250 | - | 0.12 | - | 0.0011 |
| W49 | 0.14 | 0.14 | 2.0 | 2.0 | 0.9 | 0.47 | 0.002 | 0.007 | 0.011 | - | 0.688 | 0.12 | - | 0.0011 |
| W50 | 0.11 | 0.17 | 1.7 | 1.8 | 0.6 | 0.20 | - | 0.007 | 0.011 | - | - | 1.12 | - | 0.0013 |
| W51 | 0.11 | 0.25 | 2.4 | 2.8 | 1.1 | 0.58 | 0.003 | 0.004 | 0.012 | - | - | 0.14 | 0.59 | 0.0022 |
| W52 | 0.09 | 0.12 | 2.0 | 1.7 | 1.0 | 0.45 | - | 0.004 | 0.011 | - | - | 0.13 | - | 0.0060 |
| ** Remainder: Iron and inevitable impurities | | | | | | | | | | | | | | |

(A) Welding conditions

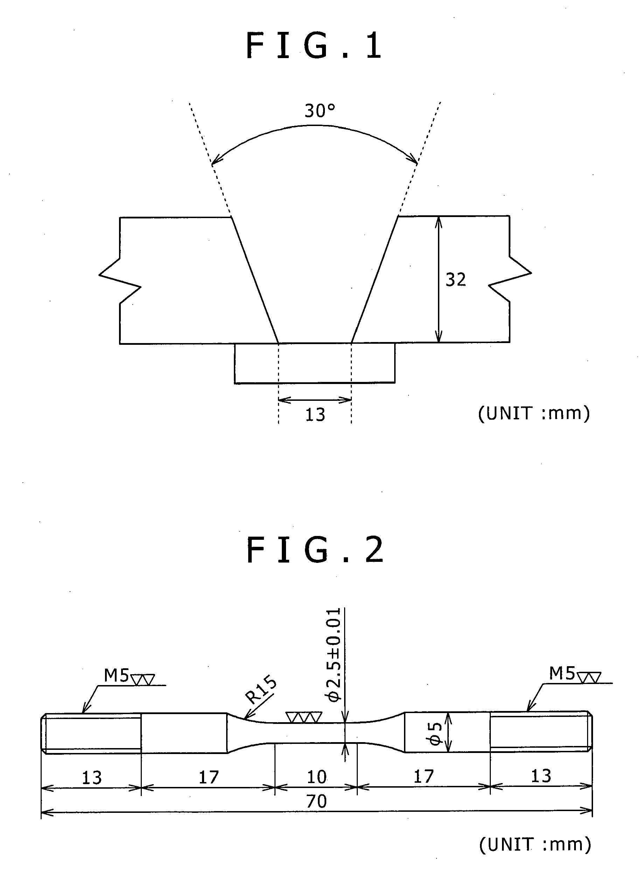

Welding method: Submerged arc welding (SAW)
Wire diameter: 4.0 mm
Welding base metal: Steel plate having 80-kologram class thickness (plate thickness: 32 mm)
Groove shape: V shape groove having a groove angle of 30°, using a backing material having a root gap of 13 mm (refer to Fig. 1)
Polarity: DCEP (Direct Current Electrode Positive)
Heat input condition (current-voltage-speed):

(A) 500 A - 29 V - 40 cpm (2.2 kJ/mm)
(B) 550 A - 30 V - 40 cpm (2.5 kJ/mm)
(C) 550 A - 30 V - 36 cpm (2.8 kJ/mm)
(D) 580 A - 32 V - 36 cpm (3.1 kJ/mm)

Stacking method: Nine layers and 19 passes
Preheating - interpass temperature: 140°C to 160°C
The obtained chemical compositions of the weld metals are listed in Tables 4 and 5 together with the fluxes (Table 1) and the welding wires (Tables 2 and 3) used. Various properties (tensile strength, particle number density of retained austenite particles, volume fraction of retained austenite particles, and resistance to hydrogen embrittlement) for each of the prepared weld metal were evaluated as following (1), (2), (3), and (4).

(1) Evaluation of tensile strength TS

From the center part of the obtained weld metal, a tensile test specimen illustrated in Fig. 2 was collected in parallel with a welding direction and the tensile test was carried out in accordance with JIS-Z2241. The test specimen having a tensile strength of more than 780 MPa was determined to pass the test.

(2) Measurement of particle number density of retained austenite particles

The final pass as welded zone of the obtained weld metal was mirror polished and corroded with Lepera's reagent. Images of two visual fields were photographed under a light microscope of 1000 magnifications. White contrast of corroded retained austenite particles were analyzed by image analysis software ("Image-Pro Plus", manufactured by Media Cybernetics, Inc.) and the particle number density of the retained austenite particles having a circle equivalent diameter of 0.15 $\mu$m or more was calculated.

(3) Measurement of volume fraction of retained austenite phase

The surface of the final pass as welded zone of the obtained weld metal was electropolished and X-ray diffraction measurement was carried out with the secondary micro X-ray diffractometer ("RINT-RAPIDII") manufactured by Rigaku Corporation. For the peaks of each lattice plane of (110), (200), (211), and (220) of the ferrite phase and the peaks of each lattice plane of (111), (200), (220), and (311) of the retained austenite phase, each volume fraction of (111), (200), (220), and (311) of the retained austenite phase was calculated based on the integrated intensity ratios of each of the peaks. An average value (arithmetic average) of the volume fractions was calculated and the average value was determined as the "volume fraction of the retained austenite phase".

(4) Evaluation of resistance to hydrogen embrittlement using large size SSRT test specimen.

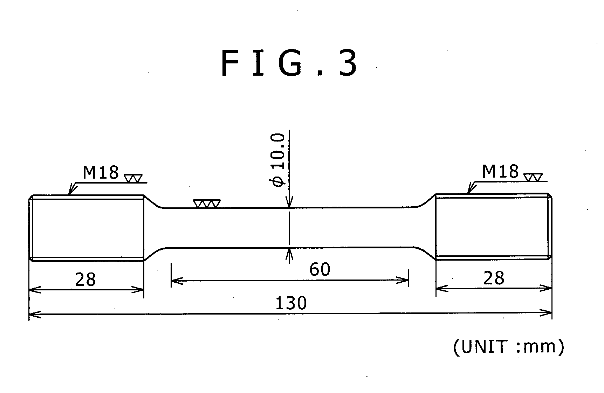

From the center part of the obtained weld metal, a large size test specimen illustrated in Fig. 3 was collected in parallel with a welding direction. Hydrogen charge was carried out under the following conditions (B).

(B) Hydrogen charge conditions

Aqueous solution: Solution in which NaCl (30 g) and KSCN (1 g) are dissolved in 1 L of water
Current density: 0.1 A/dm$^2$
Charge time: 100 hours
Under the conditions (B), hydrogen charge was carried out to the large size test specimen, and thereafter, galvanization was carried out in accordance with the following galvanization conditions (C) for preventing hydrogen escape.

(C) Galvanization conditions

Aqueous solution: Solution in which $ZnSO_4 \cdot 7H_2O$ (350 g), 97% $H_2SO_4$ (20.6 g), and $Na_2SO_4$ (60 g) are dissolved in 1 L of water.
Bath temperature: 60°C
Current density: 50 A/dm$^2$
Galvanization time: 3 minutes
The SSRT test was carried out to the galvanized test specimen at a cross head rate of $3.0 \times 10^{-2}$ mm/minute (strain rate: $6.94 \times 10^{-6}$/second). The test specimen having a breaking elongation of more than 2.0% was evaluated as excellent resistance to hydrogen embrittlement for a large size test specimen.

[Table 4]

| Experiment No. | Heat input conditions | Flux No. | Wire No. | Chemical composition of weld metal ** (% by mass) | | | | | | | | | | | | | | | [Cr]/[Mn] |
|---|---|---|---|---|---|---|---|---|---|---|---|---|---|---|---|---|---|---|---|
| | | | | C | Si | Mn | Ni | Cr | Mo | Al | N | O | Ti | V | Cu | Zr | B | | |
| 1 | A | F1 | W1 | 0.09 | 0.70 | 1.65 | 2.5 | 0.75 | - | 0.015 | 0.0042 | 0.029 | - | - | - | - | - | 0.45 |
| 2 | C | F1 | W2 | 0.09 | 0.60 | 1.98 | 1.7 | 0.43 | - | 0.018 | 0.0050 | 0.021 | - | - | 0.13 | - | 0.0012 | 0.22 |
| 3 | A | F1 | W3 | 0.10 | 0.72 | 1.67 | 2.5 | 0.75 | - | 0.016 | 0.0041 | 0.028 | - | - | 0.13 | - | - | 0.45 |
| 4 | C | F1 | W4 | 0.09 | 0.63 | 1.95 | 1.7 | 0.42 | - | 0.018 | 0.0049 | 0.020 | 0.025 | - | 0.13 | - | 0.0012 | 0.22 |
| 5 | B | F1 | W5 | 0.06 | 0.51 | 1.57 | 2.4 | 0.88 | 0.69 | 0.017 | 0.0050 | 0.026 | - | - | - | - | - | 0.56 |
| 6 | B | F1 | W6 | 0.08 | 0.75 | 1.60 | 2.5 | 0.70 | 0.05 | 0.011 | 0.0044 | 0.036 | - | - | - | - | - | 0.44 |
| 7 | B | F1 | W7 | 0.08 | 0.60 | 1.41 | 2.1 | 0.41 | 0.50 | 0.017 | 0.0061 | 0.031 | - | - | 0.10 | - | - | 0.29 |
| 8 | B | F1 | W8 | 0.09 | 0.60 | 1.23 | 2.1 | 0.40 | 0.05 | 0.016 | 0.0075 | 0.031 | - | - | 0.12 | - | - | 0.33 |
| 9 | B | F1 | W9 | 0.08 | 0.84 | 1.40 | 1.7 | 0.70 | 0.35 | 0.017 | 0.0053 | 0.024 | - | - | 0.15 | - | - | 0.50 |
| 10 | A | F1 | W10 | 0.08 | 0.60 | 1.87 | 1.7 | 0.96 | 0.05 | 0.017 | 0.0089 | 0.033 | - | - | 0.13 | - | - | 0.51 |
| 11 | B | F1 | W11 | 0.06 | 0.61 | 1.42 | 2.1 | 0.40 | 0.53 | 0.017 | 0.0052 | 0.030 | 0.009 | 0.012 | 0.13 | - | 0.0012 | 0.28 |
| 12 | A | F1 | W12 | 0.04 | 0.60 | 1.34 | 1.3 | 1.25 | 0.36 | 0.015 | 0.0055 | 0.029 | - | 0.365 | 0.32 | - | 0.0010 | 0.93 |
| 13 | B | F1 | W13 | 0.06 | 0.65 | 1.36 | 1.7 | 0.71 | 0.35 | 0.016 | 0.0049 | 0.028 | - | - | 0.13 | - | 0.0011 | 0.52 |
| 14 | B | F1 | W14 | 0.07 | 0.42 | 1.46 | 1.3 | 0.69 | 0.36 | 0.015 | 0.0048 | 0.029 | - | 0.011 | 0.13 | - | 0.0010 | 0.47 |
| 15 | A | F1 | W15 | 0.06 | 0.55 | 1.17 | 1.3 | 0.98 | 0.18 | 0.016 | 0.0048 | 0.031 | - | - | 0.20 | 0.05 | 0.0011 | 0.84 |
| 16 | A | F2 | W16 | 0.03 | 0.28 | 1.23 | 1.7 | 1.48 | 0.05 | 0.012 | 0.0093 | 0.024 | - | - | 0.13 | - | 0.0009 | 1.20 |
| 17 | B | F3 | W17 | 0.11 | 1.22 | 1.50 | 2.8 | 1.31 | 0.35 | 0.020 | 0.0081 | 0.004 | - | - | 0.13 | - | 0.0013 | 0.87 |
| 18 | B | F3 | W18 | 0.04 | 1.62 | 1.91 | 1.9 | 1.60 | 0.21 | 0.012 | 0.0070 | 0.029 | - | 0.050 | 0.13 | - | 0.0015 | 0.84 |
| 19 | A | F1 | W19 | 0.06 | 0.61 | 0.95 | 2.2 | 1.77 | 0.63 | 0.021 | 0.0055 | 0.048 | - | - | 0.12 | - | 0.0012 | 1.86 |
| 20 | B | F1 | W20 | 0.06 | 0.49 | 2.41 | 1.8 | 1.56 | 0.11 | 0.019 | 0.0040 | 0.032 | - | - | 0.13 | - | - | 0.65 |
| 21 | C | F4 | W21 | 0.08 | 0.23 | 1.68 | 1.1 | 1.03 | 0.06 | 0.015 | 0.0040 | 0.039 | - | - | 0.12 | - | - | 0.61 |
| 22 | B | F1 | W22 | 0.07 | 0.50 | 1.56 | 3.3 | 0.81 | 0.48 | 0.017 | 0.0046 | 0.029 | 0.018 | - | 0.13 | 0.02 | 0.0009 | 0.52 |
| 23 | A | F1 | W23 | 0.08 | 0.62 | 1.60 | 2.0 | 0.33 | 0.28 | 0.011 | 0.0051 | 0.030 | - | - | 0.15 | - | 0.0011 | 0.21 |
| 24 | A | F1 | W24 | 0.05 | 0.58 | 1.92 | 1.5 | 1.91 | 0.81 | 0.011 | 0.0050 | 0.030 | 0.033 | 0.141 | 0.13 | - | 0.0011 | 0.99 |

| Experiment No. | Heat input conditions | Flux No. | Wire No. | Chemical composition of weld metal ** (% by mass) | | | | | | | | | | | | | | |
|---|---|---|---|---|---|---|---|---|---|---|---|---|---|---|---|---|---|---|
| | | | | C | Si | Mn | Ni | Cr | Mo | Al | N | O | Ti | V | Cu | Zr | B | [Cr]/[Mn] |
| 25 | C | F1 | W25 | 0.10 | 0.61 | 1.21 | 2.6 | 0.45 | 0.90 | 0.013 | 0.0062 | 0.030 | - | - | 0.41 | - | 0.0018 | 0.37 |
| 26 | C | F1 | W26 | 0.05 | 0.60 | 2.03 | 1.3 | 0.75 | 0.19 | 0.027 | 0.0058 | 0.044 | 0.012 | 0.085 | 0.24 | - | 0.0010 | 0.37 |
| ** Remainder: Iron and inevitable impurities | | | | | | | | | | | | | | | | | | |

[Table 5]

| Experiment No. | Heat input conditions | Flux No. | Wire No. | Chemical composition of weld metal ** (% by mass) | | | | | | | | | | | | | | | |
|---|---|---|---|---|---|---|---|---|---|---|---|---|---|---|---|---|---|---|---|
| | | | | C | Si | Mn | Ni | Cr | Mo | Al | N | O | Ti | V | Cu | Zr | B | [Cr]/[Mn] |
| 27 | B | F1 | W27 | 0.06 | 0.60 | 1.62 | 2.9 | 0.44 | 0.30 | 0.018 | 0.0123 | 0.025 | - | - | 0.13 | - | 0.0021 | 0.27 |
| 28 | C | F1 | W28 | 0.09 | 0.88 | 1.49 | 1.7 | 0.97 | 0.55 | 0.021 | 0.0050 | 0.034 | 0.036 | - | 0.13 | - 0.0015 | 0.0015 | 0.65 |
| 29 | B | F5 | W29 | 0.08 | 1.24 | 1.54 | 1.4 | 0.49 | 0.78 | 0.015 | 0.0075 | 0.031 | - | 0.550 | 0.13 | 0.04 | 0.0026 | 0.32 |
| 30 | B | F1 | W30 | 0.08 | 0.65 | 1.32 | 1.5 | 0.49 | 0.19 | 0.025 | 0.0049 | 0.028 | - | 0.231 | 0.63 | - | 0.0010 | 0.37 |
| 31 | A | F4 | W31 | 0.06 | 0.45 | 1.38 | 1.4 | 0.68 | 0.40 | 0.013 | 0.0081 | 0.036 | 0.018 | - | 0.81 | - | 0.0017 | 0.49 |
| 32 | A | F3 | W32 | 0.07 | 1.42 | 1.44 | 2.8 | 0.62 | 0.30 | 0.017 | 0.0064 | 0.003 | - | 0.488 | 0.15 | 0.08 | 0.0010 | 0.43 |
| 33 | A | F1 | W33 | 0.07 | 0.50 | 1.60 | 2.6 | 0.78 | 0.68 | 0.017 | 0.0045 | 0.027 | - | - | 0.13 | - | 0.0042 | 0.49 |
| 34 | D | F1 | W34 | 0.06 | 0.62 | 1.33 | 2.3 | 0.86 | 0.42 | 0.012 | 0.0051 | 0.032 | - | - | 0.13 | - | 0.0010 | 0.65 |
| 35 | B | F6 | W35 | 0.01 | 0.35 | 1.49 | 1.5 | 0.71 | 0.81 | 0.013 | 0.0050 | 0.038 | - | - | 0.12 | - | 0.0011 | 0.48 |
| 36 | C | F7 | W36 | 0.06 | 2.03 | 2.53 | 1.7 | 0.95 | 0.36 | 0.017 | 0.0062 | 0.033 | - | - | 0.13 | - | - | 0.38 |
| 37 | B | F8 | W37 | 0.06 | 0.32 | 0.88 | 2.0 | 0.66 | 0.55 | 0.019 | 0.0048 | 0.031 | - | - | 0.13 | - | - | 0.75 |
| 38 | A | F9 | W38 | 0.05 | 2.05 | 1.51 | 3.6 | 0.42 | 0.40 | 0.022 | 0.0039 | 0.028 | - | - | 0.13 | - | - | 0.28 |
| 39 | A | F1 | W39 | 0.13 | 0.41 | 1.84 | 1.9 | 0.25 | 0.40 | 0.021 | 0.0044 | 0.030 | - | - | 0.13 | - | - | 0.14 |
| 40 | B | F4 | W40 | 0.07 | 0.17 | 2.02 | 2.5 | 1.38 | 0.72 | 0.012 | 0.0082 | 0.040 | - | - | 0.13 | - | - | 0.68 |
| 41 | C | F3 | W41 | 0.06 | 2.05 | 1.60 | 2.4 | 0.43 | 0.64 | 0.011 | 0.0049 | 0.038 | - | - | 0.18 | - | 0.0011 | 0.27 |
| 42 | A | F1 | W42 | 0.09 | 0.89 | 2.18 | 0.9 | 0.42 | 0.41 | 0.011 | 0.0069 | 0.051 | - | - | 0.13 | - | 0.0009 | 0.19 |
| 43 | A | F1 | W43 | 0.08 | 0.90 | 2.15 | 1.4 | 0.40 | 0.40 | 0.012 | 0.0065 | 0.043 | - | - | 0.13 | - | 0.0010 | 0.19 |
| 44 | B | F1 | W44 | 0.08 | 0.53 | 1.72 | 1.6 | 2.06 | 0.29 | 0.016 | 0.0070 | 0.035 | - | - | 0.13 | - | 0.0015 | 1.20 |
| 45 | B | F1 | W45 | 0.07 | 0.40 | 2.10 | 2.8 | 0.60 | 0.98 | 0.015 | 0.0048 | 0.031 | - | - | 0.13 | - | 0.0017 | 0.29 |
| 46 | C | F1 | W46 | 0.07 | 0.44 | 1.98 | 1.3 | 0.70 | 0.15 | 0.032 | 0.0048 | 0.028 | - | - | 0.12 | - | 0.0010 | 0.35 |
| 47 | A | F1 | W47 | 0.07 | 0.57 | 1.40 | 2.2 | 0.75 | 0.52 | 0.017 | 0.0155 | 0.030 | - | - | 0.13 | - | 0.0010 | 0.54 |
| 48 | B | F1 | W48 | 0.08 | 0.50 | 1.52 | 2.0 | 0.53 | 0.03 | 0.013 | 0.0046 | 0.026 | 0.042 | - | 0.11 | - | 0.0009 | 0.35 |
| 49 | B | F1 | W49 | 0.08 | 0.61 | 1.56 | 1.9 | 0.84 | 0.46 | 0.014 | 0.0068 | 0.033 | - | 0.621 | 0.13 | - | 0.0011 | 0.54 |
| 50 | A | F1 | W50 | 0.06 | 0.82 | 1.39 | 1.7 | 0.60 | 0.19 | 0.013 | 0.0075 | 0.032 | - | - | 1.05 | - | 0.0012 | 0.43 |

(continued)

| Experiment No. | Heat input conditions | Flux No. | Wire No. | Chemical composition of weld metal ** (% by mass) | | | | | | | | | | | | | | |
|---|---|---|---|---|---|---|---|---|---|---|---|---|---|---|---|---|---|---|
| | | | | C | Si | Mn | Ni | Cr | Mo | Al | N | O | Ti | V | Cu | Zr | B | [Cr]/[Mn] |
| 51 | B | F1 | W51 | 0.06 | 1.05 | 1.92 | 2.7 | 1.05 | 0.57 | 0.018 | 0.0049 | 0.039 | - | - | 0.13 | 0.11 | 0.0020 | 0.55 |
| 52 | B | F1 | W52 | 0.05 | 0.33 | 1.56 | 1.6 | 0.98 | 0.44 | 0.014 | 0.0050 | 0.034 | - | - | 0.13 | - | 0.0055 | 0.63 |
| ** Remainder: Iron and inevitable impurities | | | | | | | | | | | | | | | | | | |

These results are listed in Tables 6 and 7 (Experiment Nos. 1 to 52).

[Table 6]

| Experiment No. | Retained austenite | | Resistance to hydrogen embrittlement | Tensile strength TS (MPa) |
| --- | --- | --- | --- | --- |
| | Particle number density (particles/mm$^2$) | Volume fraction (%) | Breaking elongation by SSRT for large size test specimen (%) | |
| 1 | 5487 | 5.4 | 4.1 | 812 |
| 2 | 2701 | 5.5 | 2.4 | 821 |
| 3 | 5234 | 5.5 | 4.3 | 832 |
| 4 | 2786 | 5.6 | 2.4 | 843 |
| 5 | 4643 | 4.7 | 3.8 | 805 |
| 6 | 4305 | 5.0 | 3.9 | 803 |
| 7 | 3799 | 4.8 | 3.8 | 814 |
| 8 | 3968 | 5.1 | 4.0 | 818 |
| 9 | 5065 | 5.2 | 4.1 | 810 |
| 10 | 4643 | 4.9 | 4.2 | 822 |
| 11 | 3377 | 4.8 | 3.3 | 854 |
| 12 | 6078 | 4.8 | 3.7 | 891 |
| 13 | 4474 | 4.9 | 3.9 | 832 |
| 14 | 5149 | 5.2 | 4.2 | 843 |
| 15 | 5825 | 4.8 | 5.4 | 796 |
| 16 | 5403 | 4.4 | 4.2 | 792 |
| 17 | 6669 | 6.0 | 2.3 | 955 |
| 18 | 7175 | 6.5 | 2.4 | 941 |
| 19 | 4896 | 4.5 | 2.4 | 796 |
| 20 | 5825 | 5.9 | 2.3 | 940 |
| 21 | 3123 | 4.6 | 2.4 | 783 |
| 22 | 5149 | 5.5 | 2.4 | 905 |
| 23 | 2617 | 5.0 | 2.3 | 835 |
| 24 | 6247 | 4.9 | 2.2 | 957 |
| 25 | 4390 | 5.2 | 2.4 | 938 |
| 26 | 3883 | 4.8 | 2.4 | 922 |

[Table 7]

| Experiment No. | Retained austenite | | Resistance to hydrogen embrittlement | Tensile strength TS (MPa) |
| --- | --- | --- | --- | --- |
| | Particle number density (particles/mm$^2$) | Volume fraction (%) | Breaking elongation by SSRT for large size test specimen (%) | |
| 27 | 3799 | 5.3 | 2.3 | 935 |
| 28 | 4221 | 4.6 | 2.2 | 935 |

(continued)

| Experiment No. | Retained austenite | | Resistance to hydrogen embrittlement | Tensile strength TS (MPa) |
| | Particle number density (particles/mm$^2$) | Volume fraction (%) | Breaking elongation by SSRT for large size test specimen (%) | |
|---|---|---|---|---|
| 29 | 4812 | 5.6 | 2.3 | 947 |
| 30 | 4896 | 5.6 | 2.3 | 922 |
| 31 | 4896 | 5.2 | 2.2 | 960 |
| 32 | 5656 | 5.7 | 2.1 | 958 |
| 33 | 4643 | 4.9 | 2.1 | 944 |
| 34 | 3377 | 4.1 | 1.8 | 784 |
| 35 | 3123 | 4.1 | 1.9 | 751 |
| 36 | 5234 | 7.2 | 1.8 | 996 |
| 37 | 3546 | 4.2 | 1.8 | 763 |
| 38 | 4981 | 7.3 | 1.6 | 989 |
| 39 | 2110 | 5.9 | 1.8 | 987 |
| 40 | 3377 | 4.0 | 1.7 | 830 |
| 41 | 5656 | 6.9 | 1.8 | 988 |
| 42 | 2195 | 4.1 | 1.8 | 772 |
| 43 | 2364 | 4.7 | 1.9 | 803 |
| 44 | 7429 | 4.9 | 1.5 | 984 |
| 45 | 3630 | 4.7 | 1.7 | 988 |
| 46 | 3714 | 4.7 | 1.7 | 983 |
| 47 | 4981 | 4.8 | 1.2 | 992 |
| 48 | 2955 | 4.3 | 1.1 | 984 |
| 49 | 5149 | 5.0 | 1.4 | 1001 |
| 50 | 4727 | 5.1 | 1.5 | 995 |
| 51 | 6078 | 5.6 | 1.7 | 984 |
| 52 | 5234 | 4.8 | 1.8 | 985 |

From these results, the following consideration can be made.

Experiment Nos. 1 to 26 in Table 6 and Experiment Nos. 27 to 33 are examples that satisfy the requirement defined in the present invention. The weld metals having excellent resistance to hydrogen embrittlement for large size test specimens were obtained even when the weld metals had a high strength of more than 780 MPa. Specifically, the welding was carried out using appropriate welding materials (fluxes and wires) listed in Tables 1 to 3 and appropriate heat input conditions [(A) to (D)] and thus all of the chemical compositions of the weld metals and the particle number densities and the volume fractions of the retained austenite were appropriately controlled. As a result, the weld metals having desired properties were obtained.

Contrarily, Experiment Nos. 34 to 52 in Table 7 were examples that were out of any of the requirements defined in the present invention and thus desired properties were not able to be obtained.

First, Experiment No. 34 is an example in which the appropriate flux F1 is used but welding is carried out by the heat input conditions (D) having a large heat input. As a result, the volume fraction of the retained austenite particles in the weld metal was low and the resistance to hydrogen embrittlement for the large size test specimen deteriorated.

Experiment No. 35 is an example in which the flux F6 having smaller $SiO_2$ amount is used. As a result, the volume fraction of the retained austenite particles in the weld metal was low and the resistance to hydrogen embrittlement for the large size test specimen also deteriorated. The C content in the weld metal was low due to the welding wire used and thus the tensile strength deteriorated.

Experiment No. 36 is an example in which the flux F7 having a larger $SiO_2$ amount is used. As a result, the Si content is the weld metal was high and the strength significantly increased to deteriorate the resistance to hydrogen embrittlement for the large size test specimen. The Mn content in the weld metal was high due to the welding wire used and thus the tensile strength was significantly increased.

Experiment No. 37 is an example in which the flux F8 having smaller metal Si amount is used. As a result, the volume fraction of the retained austenite particles in the weld metal was low and the resistance to hydrogen embrittlement for the large size test specimen also deteriorated. The Mn content in the weld metal was low due to the welding wire used and thus the tensile strength deteriorated.

Experiment No. 38 is an example in which the flux F9 having a larger metal Si amount is used. As a result, the Si content in the weld metal was high and the strength significantly increased to deteriorate the resistance to hydrogen embrittlement for the large size test specimen. The Ni content in the weld metal was high due to the welding wire used and thus the tensile strength was significantly increased.

Experiment No. 39 is an example in which the content ratio of Cr and Mn, [Cr]/[Mn], in the weld metal is small. As a result, the particle number density of the retained austenite particles in the weld metal was small and the resistance to hydrogen embrittlement for the large size test specimen deteriorated. The C content in the weld metal was high due to the welding wire used and thus the tensile strength was significantly increased.

Experiment No. 40 is an example in which the Si content in the weld metal is low. As a result, the volume fraction of the retained austenite phase in the weld metal was low and the resistance to hydrogen embrittlement for the large size test specimen deteriorated. Experiment No. 41 is an example in which the Si content in the weld metal is high. As a result, the tensile strength significantly increased to deteriorate the resistance to hydrogen embrittlement for the large size test specimen.

Experiment No. 42 is an example in which the content ratio of Cr and Mn, [Cr]/[Mn], in the weld metal is small. As a result, the particle number density of the retained austenite particles in the weld metal was small and the resistance to hydrogen embrittlement for the large size test specimen deteriorated. In addition, the O content in the weld metal was high and the volume fraction of the retained austenite particles was small. Also from this viewpoint, the resistance to hydrogen embrittlement for the large size test specimen deteriorated. The Ni content in the weld metal was low and thus the tensile strength deteriorated.

Experiment No. 43 is an example in which the content ratio of Cr and Mn, [Cr]/[Mn], in the weld metal is small. As a result, the particle number density of the retained austenite particles in the weld metal was small and the resistance to hydrogen embrittlement for the large size test specimen deteriorated.

Experiment No. 44 is an example in which the Cr content in the weld metal is high. As a result, the strength of the weld metal was excessively high and thus the resistance to hydrogen embrittlement for the large size test specimen deteriorated. Experiment No. 45 is an example in which the Mo content in the weld metal is high. As a result, the strength of the weld metal was excessively high and thus the resistance to hydrogen embrittlement for the large size test specimen deteriorated.

Experiment No. 46 is an example in which the Al content in the weld metal is high. As a result, the strength of the weld metal was excessively high and thus the resistance to hydrogen embrittlement for the large size test specimen deteriorated. Experiment No. 47 is an example in which the N content in the weld metal is high. As a result, the strength of the weld metal was excessively high and thus the resistance to hydrogen embrittlement for the large size test specimen deteriorated.

Experiment No. 48 is an example in which the Ti content in the weld metal is high. As a result, the strength of the weld metal was excessively high and thus the resistance to hydrogen embrittlement for the large size test specimen deteriorated. Experiment No. 49 is an example in which the V content in the weld metal is high. As a result, the strength of the weld metal was excessively high and thus the resistance to hydrogen embrittlement for the large size test specimen deteriorated.

Experiment No. 50 is an example in which the Cu content in the weld metal is high. As a result, the strength of the weld metal was excessively high and thus the resistance to hydrogen embrittlement for the large size test specimen deteriorated. Experiment No. 51 is an example in which the Zr content in the weld metal is high. As a result, the strength of the weld metal was excessively high and thus the resistance to hydrogen embrittlement for the large size test specimen deteriorated. Experiment No. 52 is an example in which the B content in the weld metal is high. As a result, the strength of the weld metal was excessively high and thus the resistance to hydrogen embrittlement for the large size test specimen deteriorated.

Example 2

In Example 2, preferable wire compositions were tested.

Solid wires (wire diameter 4.0 mm) of Examples and Comparative Examples having compositions listed in Table 8 were prepared and a performance test was carried out. The wires W101 to W113 are Examples of wires having compositions in the preferable range and the wires W114 to W124 are Comparative Examples of wires having compositions out of the preferable range. The remainder in the compositions of the wires listed in Table 8 is Fe and the inevitable impurities.

[Table 8]

| Classification | No. | C | Si | Mn | P | S | Ni | Cr | Mo | Cu | V | Ti | Zr | B | ([Mn]+[Ni]) / ([Cr]+[Mo]) |
|---|---|---|---|---|---|---|---|---|---|---|---|---|---|---|---|
| Example | W101 | 0.11 | 0.12 | 2.10 | 0.003 | 0.004 | 1.70 | 1.1 | 0.34 | 0.12 | 0.007 | 0.002 | 0.005 | - | 2.6 |
| | W102 | 0.08 | 0.15 | 1.80 | 0.005 | 0.009 | 1.10 | 1.3 | 0.10 | 0.07 | 0.010 | 0.005 | 0.027 | - | 2.1 |
| | W103 | 0.10 | 0.05 | 1.50 | 0.015 | 0.008 | 1.75 | 0.5 | 0.32 | 0.09 | 0.008 | 0.003 | 0.031 | - | 4.0 |
| | W104 | 0.15 | 0.50 | 2.30 | 0.008 | 0.007 | 1.95 | 0.8 | 0.40 | 0.10 | 0.019 | 0.010 | 0.009 | 0.0030 | 3.5 |
| | W105 | 0.20 | 0.20 | 3.00 | 0.006 | 0.015 | 1.60 | 0.9 | 0.35 | 0.40 | 0.015 | 0.002 | 0.018 | 0.0050 | 3.7 |
| | W106 | 0.09 | 0.25 | 2.70 | 0.004 | 0.010 | 1.30 | 1.2 | 0.20 | 0.23 | 0.012 | 0.007 | 0.050 | - | 2.9 |
| | W107 | 0.13 | 0.18 | 1.50 | 0.007 | 0.005 | 1.00 | 1.5 | 0.45 | 0.30 | 0.014 | 0.006 | 0.045 | - | 1.3 |
| | W108 | 0.10 | 0.15 | 2.80 | 0.010 | 0.009 | 1.80 | 0.6 | 0.30 | 0.20 | 0.010 | 0.007 | 0.007 | - | 5.1 |
| | W109 | 0.09 | 0.07 | 1.95 | 0.013 | 0.009 | 1.23 | 0.8 | 0.40 | 0.25 | - | 0.005 | 0.009 | 0.0010 | 2.7 |
| | W110 | 0.12 | 0.10 | 2.00 | 0.005 | 0.012 | 1.30 | 1.0 | 0.20 | - | 0.010 | 0.003 | 0.016 | - | 2.8 |
| | W111 | 0.13 | 0.26 | 2.40 | 0.006 | 0.010 | 1.40 | 1.1 | 0.30 | 0.20 | 0.009 | - | 0.030 | - | 2.7 |
| | W112 | 0.15 | 0.40 | 2.10 | 0.010 | 0.008 | 1.25 | 0.7 | 0.35 | - | - | - | - | - | 3.2 |
| | W113 | 0.12 | 0.35 | 1.70 | 0.008 | 0.007 | 1.70 | 0.9 | 0.27 | 0.18 | 0.017 | 0.001 | - | 0.0020 | 2.9 |
| Comparative Example | W114 | 0.06 | 0.13 | 2.05 | 0.004 | 0.005 | 1.60 | 0.7 | 0 | 0.10 | 0.008 | 0.003 | 0.008 | - | 5.2 |
| | W115 | 0.11 | 0 | 1.55 | 0.008 | 0.007 | 1.20 | 3.0 | 0.45 | 0.14 | 0.012 | 0.001 | 0.010 | - | 0.8 |
| | W116 | 0.10 | 0.22 | 0.80 | 0.010 | 0.004 | 1.05 | 1.4 | 0.80 | 0.09 | 0.006 | 0.006 | 0.030 | - | 0.8 |
| | W117 | 0.09 | 0.09 | 2.00 | 0.025 | 0.010 | 1.90 | 1.2 | 0.30 | 0 | 0.007 | 0.005 | 0.040 | - | 2.6 |
| | W118 | 0.25 | 0.30 | 1.75 | 0.005 | 0.012 | 1.75 | 0.9 | 0.20 | 0.12 | 0.050 | 0.002 | 0.032 | - | 3.2 |
| | W119 | 0.16 | 0.25 | 3.50 | 0.007 | 0.009 | 1.80 | 0.6 | 0.25 | 0.19 | 0.009 | 0.002 | 0.025 | - | 6.2 |
| | W120 | 0.11 | 0.70 | 2.60 | 0.005 | 0.008 | 1.65 | 0.7 | 0.15 | 0.30 | 0.005 | 0.004 | 0.033 | 0.0020 | 5.0 |
| | W121 | 0.14 | 0.18 | 1.70 | 0.008 | 0.030 | 1.70 | 1.1 | 0.32 | 0.37 | 0.016 | 0.001 | 0.100 | - | 2.4 |
| | W122 | 0.15 | 0.42 | 2.20 | 0.010 | 0.005 | 0.50 | 1.0 | 0.33 | 0.17 | 0.008 | 0.007 | 0.009 | - | 2.0 |
| | W123 | 0.18 | 0.12 | 1.80 | 0.006 | 0.007 | 1.25 | 0 | 0.40 | 0.70 | 0.013 | 0.006 | 0.022 | - | 7.6 |
| | W124 | 0.10 | 0.33 | 1.90 | 0.005 | 0.006 | 2.50 | 0.6 | 0.15 | 0.28 | 0.015 | 0.030 | 0.025 | - | 5.9 |

Chemical composition of wire (% by mass)

<Entire weld metal welding>

Each solid wire of Examples and Comparative Examples and sintering type fluxes (IIW basicity BL = 3.5) listed in Table 9 were used to carry out welding under conditions listed in Table 11 using a 780 MPa-tensile strength class steel plate having a composition listed in Table 10 as a base metal. The remainder of the composition of the steel plate listed in Table 10 was Fe and the inevitable impurities.

[Table 9]

| No. | Chemical composition of flux (% by mass) | | | | | | | |
|---|---|---|---|---|---|---|---|---|
| | MgO | $Al_2O_3$ | $CaF_2$ | $SiO_2$ | Metal carbonate (in terms of $CO_2$) | CaO | Metal Si | Others |
| F101 | 29 | 14 | 17 | 15 | 6 | 13 | 1.9 | 4.1 |
| F102 | 28 | 20 | 12 | 16 | 4 | 11 | 2.0 | 7.0 |

[Table 10]

| Steel plate thickness (mm) | Chemical composition of base metal (% by mass) | | | | | | | |
|---|---|---|---|---|---|---|---|---|
| | C | Si | Mn | P | S | Ni | Cr | Mo |
| 25 | 0.11 | 0.27 | 0.81 | 0.005 | 0.006 | 0.78 | 0.51 | 0.45 |

[Table 11]

| Groove shape | V shape groove having a groove angle of 30°, root gap = 13mm, and using backing material |
|---|---|
| Welding position | Flat |
| Welding conditions | Current: 550 A, Voltage: 30 V, and welding rate: 40 cm/min<br>Power source polarity: Direct current (DCEP)<br>Welding heat input = 2.5 kJ/mm |
| Number of stacks | Seven layers and 15 passes |
| Preheating-interpass temperature | 140°C to 160°C |

For the obtained weld metals, mechanical properties of the weld metals and volume fractions of the retained austenite phase were measured and the resistance to hydrogen embrittlement was evaluated by the following methods.

<Tensile test>

A JIS Z3111 A1 test specimen was collected from the center position in the plate thickness at the center of the weld metal and the tensile test was carried out using this test specimen at a test temperature of room temperature (20°C to 23°C). As a result, the weld metal having a tensile strength of 770 MPa or more was determined to pass the test.

<Impact test>

A JIS Z 3111 V notch test specimen was collected from the center position in the plate thickness at the center of the weld metal and the impact test was carried out using this test specimen at a test temperature of -60°C. As a result, the weld metal having an average absorbed energy at -60°C of 47 J or more was determined to pass the test.

<Volume fraction of retained austenite phase>

The surface of the final pass as welded zone of the obtained weld metal was electropolished and X-ray diffraction measurement was carried out with the secondary micro X-ray diffractometer RINT-RAPIDII manufactured by Rigaku Corporation. From the results, for the peaks of each lattice plane of (110), (200), (211), and (220) of the ferrite phase and the peaks of each lattice plane of (111), (200), (220), and (311) of the retained austenite phase, each volume fraction of (111), (200), (220), and (311) of the retained austenite phase was calculated based on the integrated intensity ratios of each of the peaks. An average value (arithmetic average) of the volume fractions was calculated and the average value was determined as the "volume fraction of the retained austenite phase".

<Resistance to hydrogen embrittlement>

A JIS Z3111 A0 tensile test specimen was collected from the center part of the weld metal in parallel with a welding direction. Under the conditions (A) described below, hydrogen charge was carried out to the test specimen, and thereafter, galvanization was carried out in accordance with the following galvanization conditions (B) for preventing hydrogen escape. The SSRT test was carried out using this test specimen at a cross head rate of $3.0 \times 10^{-2}$ mm/minute (strain rate: $6.94 \times 10^{-6}$/second). The test specimen having a breaking elongation of more than 2.0% is evaluated as "excellent resistance to hydrogen embrittlement".

(A) Hydrogen charge conditions

• Treatment solution: Aqueous solution in which 30 g of NaCl and 1 g of KSCN are dissolved in 1 L of water

- Current density: 0.1 A/dm$^2$
- Charge time: 100 hours

(B) Galvanization conditions

- Galvanization solution: Aqueous solution in which 350 g of $ZnSO_4 \cdot 7H_2O$, 20.6 g of 97% by volume $H_2SO_4$, and 60 g of $Na_2SO_4$ are dissolved in 1 L of water
- Bath temperature: 60°C
- Current density: 50 A/dm$^2$
- Galvanization time: 3 minutes

The evaluation results in accordance with the above test methods are collectively listed in Table 12.

[Table 12]

| | | Wire No. | Flux No. | Mechanical properties | | Retained austenite volume fraction (%) | Resistance to hydrogen embrittlement Breaking elongation by SSRT for large size test specimen (%) |
|---|---|---|---|---|---|---|---|
| | | | | Tensile strength (MPa) | Absorbed energy (J) at -60°C | | |
| Example | 1 | W101 | F101 | 814 | 104 | 5. 3 | 4. 5 |
| | 2 | W102 | F101 | 798 | 96 | 5. 0 | 4. 1 |
| | 3 | W103 | F101 | 805 | 98 | 4. 0 | 2. 4 |
| | 4 | W104 | F102 | 867 | 101 | 4. 8 | 3. 0 |
| | 5 | W105 | F101 | 882 | 87 | 4. 6 | 3. 1 |
| | 6 | W106 | F101 | 811 | 100 | 6. 0 | 5. 5 |
| | 7 | W107 | F101 | 845 | 92 | 4. 4 | 2. 3 |
| | 8 | W108 | F101 | 785 | 50 | 4. 6 | 3. 5 |
| | 9 | W109 | F101 | 802 | 90 | 5. 0 | 4. 0 |
| | 10 | W110 | F101 | 814 | 101 | 5. 5 | 5. 0 |
| | 11 | W111 | F101 | 798 | 105 | 5. 0 | 4. 8 |
| | 12 | W112 | F101 | 843 | 99 | 5. 7 | 5. 4 |
| | 13 | W113 | F101 | 837 | 100 | 4. 0 | 2. 6 |
| Comparative Example | 1 | W114 | F101 | 605 | 40 | 4. 8 | 3. 2 |
| | 2 | W115 | F101 | 728 | 36 | 3. 6 | 1. 2 |
| | 3 | W116 | F101 | 793 | 65 | 2. 1 | 0. 2 |
| | 4 | W117 | F101 | 812 | 15 | 4. 6 | 2. 2 |
| | 5 | W118 | F101 | 912 | 28 | 3. 0 | 1. 8 |
| | 6 | W119 | F102 | 878 | 23 | 4. 5 | 2. 1 |
| | 7 | W120 | F101 | 845 | 35 | 2. 8 | 1. 5 |
| | 8 | W121 | F101 | 785 | 18 | 3. 4 | 1. 8 |
| | 9 | W122 | F101 | 801 | 45 | 4. 0 | 2. 0 |
| | 10 | W123 | F101 | 732 | 40 | 4. 7 | 2. 1 |
| | 11 | W124 | F101 | 833 | 44 | 3. 1 | 1. 1 |

As listed in Table 12, Comparative Example 1 using the wire W114 in which the C content was lower than the preferable range resulted in deterioration in the low-temperature toughness of the weld metal and lowering in the tensile strength. Also Comparative Example 5 using the wire W118 in which the C content was higher than the preferable range resulted in significant deterioration in the low-temperature toughness of the weld metal and, in addition, deterioration in the resistance to hydrogen embrittlement.

Comparative Example 2 using the wire W115 in which Si was not contained and the Cr content was higher than the preferable range resulted in lowering in the low-temperature toughness and the tensile strength and, in addition, deterioration in the resistance to hydrogen embrittlement. Similarly, Comparative Example 7 using the wire W120 in which the Si content was higher than the preferable range also resulted in lowering in the low-temperature toughness of the weld metal and, in addition, deterioration in the resistance to hydrogen embrittlement.

Comparative Example 3 using the wire W116 in which the Mn content was lower than the preferable range and the Mo content was higher than the preferable range resulted in deterioration in the resistance to hydrogen embrittlement of the weld metal. On the other hand, Comparative Example 6 using the wire W119 in which the Mn content was higher than the preferable range resulted in deterioration in the low-temperature toughness of the weld metal.

Comparative Example 4 using the wire W117 in which the P content was higher than the preferable range resulted in significant lowering in the low-temperature toughness of the weld metal. Comparative Example 8 using the wire W121 in which the S content was higher than the preferable range resulted in significant lowering in the low-temperature toughness of the weld metal and, in addition, deterioration in the resistance to hydrogen embrittlement.

Comparative Example 9 using the wire W122 in which the Ni content is lower than the preferable range resulted in deterioration in the low-temperature toughness of the weld metal. On the other hand, Comparative Example 11 using the wire W124 in which the Ni content was higher than the preferable range resulted in deterioration in the low-temperature toughness of the weld metal. Comparative Example 10 using the wire W123 that did not contain Cr resulted in deterioration in the low-temperature toughness of the weld metal and, in addition, lowering in the tensile strength.

On the other hand, Examples using the wires W101 to W113 that were prepared in the preferable range provided the weld metals having excellent low-temperature toughness and resistance to hydrogen embrittlement.

The present invention has been described in detail and with reference to the specific embodiments. It is clear to those skilled in the art that various changes and modifications can be made without departing from the spirit and the scope of the present invention.

This application is based on Japanese Patent Application filed on January 11, 2013 (Japanese Unexamined Patent Application Publication No. 2013-004074) and Japanese Patent Application filed on October 31, 2013 (Japanese Unexamined Patent Application Publication No. 2013-226438). The contents of these applications are incorporated herein by reference.

INDUSTRIAL APPLICABILITY

The present invention is applicable to various welded structures and provides the weld metal having excellent resistance to hydrogen embrittlement.

**Claims**

1. A weld metal having excellent resistance to hydrogen embrittlement comprising:

   C of 0.02% to 0.12% (by mass%, the same holds true for each chemical composition described below);
   Si of 0.18% to 2.00%;
   Mn of 0.90% to 2.5%;
   Ni of 1.0% to 3.5%;
   Cr of 0.3% to 2.0%;
   Al of 0.030% or less (excluding 0%);
   N of 0.015% or less (excluding 0%); and
   O of 0.050% or less (excluding 0%);
   wherein the remainder consists of iron and inevitable impurities; the weld metal comprises 2500 particles/mm$^2$ or more of retained austenite particles having a circle-equivalent diameter of 0.15 $\mu$m or more;
   a volume fraction of a retained austenite phase is 4.3% or more relative to the entire structures; and
   a content ratio of Cr and Mn, [Cr]/[Mn], is 0.20 or more.

2. The weld metal according to claim 1, further comprising at least one of Mo of 0.95% or less (excluding 0%), Ti of less than 0.040% (excluding 0%); V of 0.60% or less (excluding 0%), Cu of 1.0% or less (excluding 0%), Zr of 0.10% or less (excluding 0%), and B of 0.0050% or less (excluding 0%).

3. The weld metal according to claim 1 or 2, wherein the weld metal is formed by submerged arc welding.

4. A solid wire for submerged arc welding comprising:

   C of 0.07% to 0.20%;
   Si of 0.05% to 1.60%;
   Mn of 1.30% to 3.20%;
   Ni of 1.00% to 3.70%;
   Cr of 0.3% to 2.2%; and
   Mo of 2.0% or less (including 0%) per total mass of the wire,
   wherein the remainder consists of iron and inevitable impurities.

5. The solid wire for submerged arc welding according to claim 4, wherein the solid wire satisfies the following formula (A), where a Mn content (%), a Ni content (%), a Cr content (%), and Mo content (%) are defined as [Mn], [Ni], [Cr], and [Mo], respectively.
   [Formula 1]

$$1.4 \leqq \frac{([Mn] + [Ni])}{([Cr] + [Mo])} \leqq 4.0 \cdots (A)$$

**6.** The solid wire for submerged arc welding according to claim 4 or 5, further comprising at least one element of Cu of 0.07% to 0.40%, V of 0.019% or less, Zr of 0.050% or less, Ti of 0.010% or less, and B of 0.0050% or less.

# F I G . 1

30°

32

13

(UNIT :mm)

# F I G . 2

M5

R15

φ2.5±0.01

M5

φ5

13  17  10  17  13

70

(UNIT :mm)

# FIG.3

(UNIT :mm)

## INTERNATIONAL SEARCH REPORT

| International application No. |
| --- |
| PCT/JP2014/050369 |

| A. CLASSIFICATION OF SUBJECT MATTER |
| --- |
| *B23K35/30*(2006.01)i, *C22C38/58*(2006.01)i |

According to International Patent Classification (IPC) or to both national classification and IPC

| B. FIELDS SEARCHED |
| --- |

Minimum documentation searched (classification system followed by classification symbols)
B23K35/30, C22C38/00-38/60

Documentation searched other than minimum documentation to the extent that such documents are included in the fields searched
Jitsuyo Shinan Koho            1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | WO 2012/105617 A1 (Kobe Steel, Ltd.), 09 August 2012 (09.08.2012), claims & EP 2671668 A1            & US 2013/0315777 A1 & JP 2012-176434 A | 1-6 |
| X A | JP 8-257789 A (Nippon Steel Corp.), 08 October 1996 (08.10.1996), claims; table 2, W3 (Family: none) | 4,5 6 |
| X A | JP 54-11846 A (Nippon Steel Corp.), 29 January 1979 (29.01.1979), claims; table 4, B11, B12 (Family: none) | 4 5,6 |

| ☒ Further documents are listed in the continuation of Box C. | ☐ See patent family annex. |
| --- | --- |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 24 March, 2014 (24.03.14) | 08 April, 2014 (08.04.14) |

| Name and mailing address of the ISA/ Japanese Patent Office | Authorized officer |
| --- | --- |
| Facsimile No. | Telephone No. |

Form PCT/ISA/210 (second sheet) (July 2009)

## INTERNATIONAL SEARCH REPORT

International application No.

PCT/JP2014/050369

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2008/123329 A1 (JFE Steel Corp.),<br>16 October 2008 (16.10.2008),<br>claims; table 2, m<br>& US 2010/0119861 A1 & EP 2130937 A1<br>& JP 2008-240096 A | 6<br>4,5 |
| X<br>A | WO 2010/117074 A1 (Nippon Steel Corp.),<br>14 October 2010 (14.10.2010),<br>paragraph [0049]; table 2, B<br>& US 2012/0043304 A1 & EP 2418043 A1 | 6<br>4,5 |
| X<br>A | JP 2009-50865 A (Nippon Steel Corp.),<br>12 March 2009 (12.03.2009),<br>claims; table 4, S8<br>(Family: none) | 6<br>4,5 |
| X<br>A | JP 2007-90399 A (Nippon Steel Corp.),<br>12 April 2007 (12.04.2007),<br>paragraphs [0090], [0091]; table 3, B, C<br>(Family: none) | 6<br>4,5 |
| X<br>A | JP 62-114796 A (Nippon Steel Corp.),<br>26 May 1987 (26.05.1987),<br>claims; table 2, 11<br>(Family: none) | 6<br>4,5 |
| P,A | WO 2013/129284 A1 (Kobe Steel, Ltd.),<br>06 September 2013 (06.09.2013),<br>claims<br>(Family: none) | 1-6 |

Form PCT/ISA/210 (continuation of second sheet) (July 2009)

## REFERENCES CITED IN THE DESCRIPTION

**Patent documents cited in the description**

- JP 2005040816 A
- JP 2003033876 A
- JP 2002115032 A
- JP H11147196 B
- JP 2007260715 A
- JP 2007260716 A
- JP 2012176434 A
- JP 2004337863 A
- JP 2013004074 A
- JP 2013226438 A